# EUROPEAN PATENT APPLICATION

(11) **EP 4 328 246 A1**
(43) Date of publication of application: **28.02.2024**
(21) Application number: 22791810.9
(22) Date of filing: 22.04.2022
(51) Int. Cl.: C08F 2/46, C09D 11/101, C09D 11/38

(54) **ULTRAVIOLET-CURABLE AQUEOUS INK, DISPERSION, ULTRAVIOLET-CURABLE AQUEOUS COMPOSITION, AND PRINTED MATTER**

(30) Priority: 23.04.2021 JP 2021072963
(71) Applicant: Mitsubishi Chemical Corporation, Chiyoda-ku Tokyo 100-8251 (JP)
(72) Inventor: KARASAWA, Tamae, Tokyo 100-8251 (JP); INABA, Keisuke, Tokyo 100-8251 (JP); NAKAGAWA, Tomoko, Tokyo 100-8251 (JP); SAKATANI, Shuhei, Tokyo 100-8251 (JP); KASAI, Kengo, Tokyo 100-8251 (JP)
(74) Representative: Hoffmann Eitle
(86) International application number: PCT/JP2022/018528
(87) International publication number: WO 2022/225039

(57) **Abstract**

Provided is a UV-curable water-based ink excellent in coating film performance, especially alcohol resistance and scratch resistance. The UV-curable water-based ink includes at least a UV-curable oligomer, a colorant, and a mercapto compound, in which the UV-curable oligomer has a structural unit derived from a compound represented by the following chemical formula. 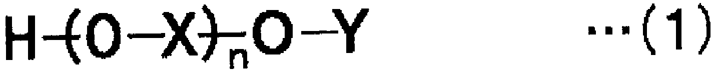 (In formula (1), X is an alkylene group, Y is a (meth)acryloyl group, an allyl group, an acyl group, or a hydrogen atom, and n is an integer of 2 or more.) The UV-curable water-based ink alternatively includes a colorant and a mercapto compound, in which the UV-curable oligomer has a structural unit derived from a polyisocyanate compound (A), and the compound (A) is a compound having three or more isocyanate groups in one molecule.

## Description

### Technical Field

The present invention relates to a UV-curable water-based ink, also to a printed article using the UV-curable water-based ink, and further to a UV-curable water-based composition and a dispersion that are favorable for the UV-curable water-based ink.

### Background Art

Features of inkjet printers are that they facilitate full-color printing, they are less noisy, high-resolution images can be obtained at low cost, high-speed printing is possible, printing is possible not only on flat surfaces but also on curved surfaces and the like, and large-area printing is also easy, for example. Therefore, in recent years, they are rapidly becoming popular not only for personal use, but also as commercial inkjet printers for signage applications, window films, posters, car wrapping, wallpapers, and the like.

Required characteristics of commercial inkjet printers are (1) high image quality of printed articles, (2) high coating film properties, (3) high-speed printability, (4) substrate versatility, and (5) environment safety, for example. In the case of making large-area printed articles or printed articles for outdoor use, printed films are required to have excellent coating film performance in terms of water resistance, alcohol resistance, coating film strength, light resistance, and the like.

Conventionally, as printing inks for commercial inkjet printers, there are water-based inks in which a pigment is dispersed in a water-based medium; solvent UV inks in which a pigment and a UV-curable monomer are dispersed or dissolved in an organic solvent; solvent-free UV inks in which a pigment is dispersed in a UV-curable monomer in the absence of a solvent; water-based latex inks in which a pigment and a resin are dispersed in a water-based medium; UV-curable water-based inks in which a pigment and a UV-curable oligomer are dispersed in a water-based medium; and the like.

Among them, a UV-curable water-based ink has all the characteristics in a relatively well-balanced manner. However, water-based inks generally have poor coating film performance and low coating film strength, and cannot be said to be suitable for large-area printed articles or printed articles for outdoor use.

As an improvement in the scratch resistance of such a UV-curable water-based ink, for example, an inkjet recording ink including water, a reaction initiator and/or a crosslinking agent, and a compound that reacts with the reaction initiator and/or crosslinking agent, the inkjet recording ink being configured such that the reaction initiator and/or crosslinking agent is contained as a coated body coated with a resin, the coated body has a volume average particle size of 50 nm or more and 500 nm or less, and the resin has a weight average molecular weight of 500 or more and 5,000 or less, has been developed (see PTL 1 below).

### Citation List

### Patent Literature

PTL 1: JP2019-163381A

### Summary of Invention

### Technical Problem

Thus, an object of the present invention is to provide, as a UV-curable water-based ink having all the characteristics in a relatively well-balanced manner, a UV-curable water-based ink having further improved coating film performance than before, which is excellent especially in alcohol resistance and scratch resistance.

### Solution to Problem

The present inventors have conducted extensive research. As a result, they have found that by using a UV-curable oligomer, and also blending a mercapto compound as an additive, a UV-curable water-based ink excellent in alcohol resistance and scratch resistance can be achieved.

The present invention has been accomplished based on such findings, and the gist is as follows.
[1] A UV-curable water-based ink including at least a UV-curable oligomer, a colorant, and a mercapto compound, in which the UV-curable oligomer has a structural unit derived from a compound represented by the following formula (1): 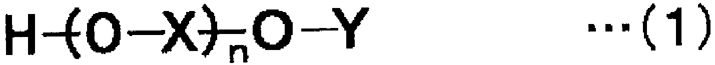 wherein X is an alkylene group, Y is a (meth)acryloyl group, an allyl group, an acyl group, or a hydrogen atom, and n is an integer of 2 or more.
[2] The UV-curable water-based ink according to [1], in which the UV-curable oligomer further has a structural unit derived from a compound containing four or more polymerizable unsaturated bonds.
[3] The UV-curable water-based ink according to [1], in which the UV-curable oligomer further has a structural unit derived from a polyisocyanate compound (A), and the compound (A) is a compound having two or more isocyanate groups in one molecule.
[4] A UV-curable water-based ink including at least a UV-curable oligomer, a colorant, and a mercapto compound, in which the UV-curable oligomer has a structural unit derived from a polyisocyanate compound (A), and the compound (A) is a compound having three or more isocyanate groups in one molecule.
[5] The UV-curable water-based ink according to any of [1] to [4], in which the mercapto compound is a secondary thiol.
[6] The UV-curable water-based ink according to any of [1] to [5], in which the mercapto compound is a polyfunctional thiol.
[7] The UV-curable water-based ink according to any of [1] to [6], in which the content of the mercapto compound is 0.01 mass% or more and 5 mass% or less.
[8] The UV-curable water-based ink according to any of [1] to [7], further including at least one of a polymerization initiator, a sensitizer, and a surfactant.
[9] The UV-curable water-based ink according to any of [1] to [8], in which the mercapto compound is encapsulated in the UV-curable oligomer.
[10] The UV-curable water-based ink according to any of [1] to [9], including a polymerization initiator and/or a sensitizer, in which at least one of the polymerization initiator and/or sensitizer is encapsulated in the UV-curable oligomer.
[11] The UV-curable water-based ink according to any of [1] to [10], in which the UV-curable oligomer is nonionic.
[12] The UV-curable water-based ink according to any of [1] to [11], in which the UV-curable oligomer has an average particle size of 10 nm or more and 200 nm or less.
[13] The UV-curable water-based ink according to any of [1] to [12], in which the UV-curable oligomer has an average particle size of 10 nm or more and 200 nm or less.
[14] A printed article having a cured product formed from the UV-curable water-based ink according to any of [1] to [13] on a recording medium.
[15] A dispersion being a dispersion of a UV-curable oligomer and including 0.01 mass% or more and 10 mass% or less of a mercapto compound, in which the UV-curable oligomer has a structural unit derived from a compound represented by the following formula (1): 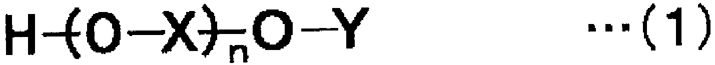 wherein X is an alkylene group, Y is a (meth)acryloyl group, an allyl group, an acyl group, or a hydrogen atom, and n is an integer of 2 or more.
[16] A dispersion being a dispersion of a UV-curable oligomer and including 0.01 mass% or more and 10 mass% or less of a mercapto compound, in which the UV-curable oligomer has a structural unit derived from a polyisocyanate compound (A), and the compound (A) is a compound having three or more isocyanate groups in one molecule.
[17] The dispersion according to [15] or [16], in which the mercapto compound is a secondary thiol.
[18] The dispersion according to any of [15] to [17], in which the mercapto compound is a polyfunctional thiol.
[19] A UV-curable water-based composition including a UV-curable oligomer, at least one of a polymerization initiator, a sensitizer, and a surfactant, and a mercapto compound, in which the UV-curable oligomer has a structural unit derived from a compound represented by the following formula (1): 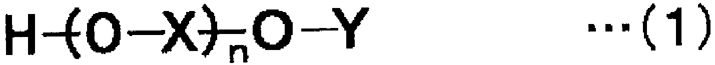 wherein X is an alkylene group, Y is a (meth)acryloyl group, an allyl group, an acyl group, or a hydrogen atom, and n is an integer of 2 or more.
[20] A UV-curable water-based composition including a UV-curable oligomer, at least one of a polymerization initiator, a sensitizer, and a surfactant, and a mercapto compound, in which the UV-curable oligomer has a structural unit derived from a polyisocyanate compound (A), and the compound (A) is a compound having three or more isocyanate groups in one molecule.
[21] The UV-curable water-based composition according to [19], in which the UV-curable oligomer further has a structural unit derived from a compound containing four or more polymerizable unsaturated bonds.
[22] The UV-curable water-based composition according to [19], in which the UV-curable oligomer further has a structural unit derived from a polyisocyanate compound (A), and the compound (A) is a compound having two or more isocyanate groups in one molecule.
[23] The UV-curable water-based composition according to any of [19] to [22], in which the mercapto compound is a secondary thiol.
[24] The UV-curable water-based composition according to any of [19] to [23], in which the mercapto compound is a polyfunctional thiol.
[25] The UV-curable water-based composition according to any of [19] to [24], in which the mercapto compound is encapsulated in the UV-curable oligomer.
[26] The UV-curable water-based composition according to any of [19] to [25], including a polymerization initiator and/or a sensitizer, in which at least one of the polymerization initiator and/or sensitizer is encapsulated in the UV-curable oligomer.
[27] The UV-curable water-based composition according to any of [19] to [26], in which the UV-curable oligomer is nonionic.

### Advantageous Effects of Invention

The UV-curable water-based ink of the present invention is excellent in coating film performance, especially alcohol resistance and scratch resistance, while meeting the required characteristics as a printing ink in a well-balanced manner.

### Description of Embodiments

Hereinafter, some embodiments of the present invention will be described. However, the present invention is not limited to these embodiments.

Incidentally, unless otherwise noted, the expression "X to Y" (X and Y are any numbers) in the present invention encompasses, together with the meaning of "X or more and Y or less", the meaning of "preferably more than X" and "preferably less than Y".

### [UV-Curable Water-Based Ink]

The UV-curable water-based ink of the present invention (hereinafter sometimes referred to as "ink of the present invention") is, in a first embodiment of the ink of the present invention, characterized by including at least a UV-curable oligomer, a colorant, and a mercapto compound, in which the UV-curable oligomer has a structural unit derived from a compound represented by the following formula (1). 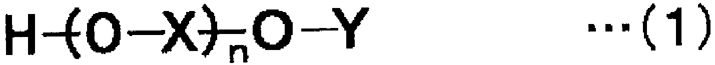 (In formula (1), X is an alkylene group, Y is a (meth)acryloyl group, an allyl group, an acyl group, or a hydrogen atom, and n is an integer of 2 or more.)

In a second embodiment of the ink of the present invention, the ink is characterized by including at least a UV-curable oligomer, a colorant, and a mercapto compound, in which the UV-curable oligomer has a structural unit derived from a polyisocyanate compound (A), and the compound (A) is a compound having three or more isocyanate groups in one molecule.

Incidentally, although the ink of the present invention is UV-curable, the active energy rays used for curing are not limited to UV rays.

Curing of the ink of the present invention is not limited to curing with active energy rays, and may also be curing with heat, for example.

In addition, the ink of the present invention is favorably used for inkjet printing.

### [UV-Curable Oligomer]

There are no particular restrictions on whether the UV-curable oligomer used in the present invention is ionic. Although the oligomer may be nonionic or ionic (anionic, cationic, or amphoteric), when it is nonionic, aggregation of the pigment can be suppressed to enhance the storage stability of the ink. Here, being nonionic means, for example, that the hydrophilic group of the UV-curable oligomer is composed of an ether bond or a hydroxy group, which is not ionically dissociated in water. Being ionic (anionic, cationic, or amphoteric) means, for example, that the UV-curable oligomer has a carboxy group or an amino group, which can be ionically dissociated in water. More specifically, as an anionic UV-curable oligomer, a UV-curable oligomer containing a carboxy group can be mentioned, for example.

There are no particular restrictions on the UV-curable oligomer used in the present invention, but the following <1> to <3> are preferable, for example, because they are excellent in UV curability, fixability, water dispersion stability, pigment aggregation suppression effects, alcohol resistance, and the like.
<1> One having a structural unit derived from a compound represented by the following formula (1). 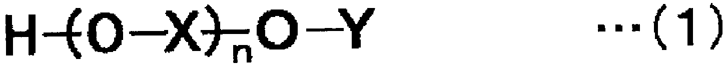 (In formula (1), X is an alkylene group, Y is a (meth)acryloyl group, an allyl group, an acyl group, or a hydrogen atom, and n is an integer of 2 or more.)
<2> One having a structural unit derived from a polyisocyanate compound (A), in which the compound (A) is a compound having three or more isocyanate groups in one molecule.
<3> One having a structural unit derived from a polyisocyanate compound (A), a structural unit derived from the compound (B') shown below, and a structural unit derived from the compound (C') shown below.

Incidentally, a UV-curable oligomer like the above <3> is usually produced by reacting a polyisocyanate compound (A), a compound (B'), and a compound (C').
Compound (B'): A compound containing two or more polymerizable unsaturated bonds and capable of bonding with a polyisocyanate compound (A).
Compound (C'): A water-soluble compound capable of bonding with a polyisocyanate compound (A).

In addition, as the UV-curable oligomer used in the present invention, one having a structural unit derived from a (meth)acrylate, particularly one having a structural unit derived from a polyfunctional (meth)acrylate, is preferable. Further, one having a structural unit derived from a polyfunctional (meth)acrylate and a structural unit derived from a polyalkylene glycol is preferable. That is, from the viewpoint of reactivity, the compound (B') is preferably a hydroxy group-containing polyfunctional (meth)acrylate (B). In addition, from the viewpoint of water dispersibility, the compound (C') is preferably a polyalkylene glycol (C). Such a UV-curable oligomer is usually produced by reacting a polyisocyanate compound (A), a hydroxy group-containing polyfunctional (meth)acrylate (B), and a polyalkylene glycol (C).

Incidentally, in the present invention, "(meth)acrylate" means acrylate or methacrylate.

In the present invention, "structural unit derived from X" means a structural unit whose raw material is a compound X and which is incorporated into the molecular structure of the UV-curable oligomer as a result of the reaction of the compound X with other compounds. Incidentally, "structural unit derived from X" is not necessarily limited to using the compound X as a raw material. That is, even a structural unit formed from a raw material other than X falls under "structural unit derived from X" when the chemical structure is the same.

In the UV-curable oligomer described above, the polyisocyanate compound (A)-derived structural unit moiety contributes to the adhesion of a printed film to a recording medium.

The compound (B')-derived structural unit moiety contributes to UV curability. In addition, in the case where the compound (B') is a hydroxy group-containing polyfunctional (meth)acrylate (B), the (meth)acryloyl group contained in a structural unit derived from the hydroxy group-containing polyfunctional (meth)acrylate (B) contributes to UV curability.

The compound (C')-derived structural unit moiety contributes to the water dispersibility of the oligomer in the ink. In addition, in the case where the compound (C') is a polyalkylene glycol (C), the polyalkylene glycol chain in a structural unit derived from the polyalkylene glycol (C) contributes to the water dispersibility of the oligomer in the ink.

The UV-curable oligomer described above has all these structural units within the same molecule and thus is preferable.

In addition, because the resulting oligomer is excellent also in solvent resistance, such as alcohol resistance, it is preferable that the structural unit derived from a polyisocyanate compound (A) bonds with each of the structural unit derived from a hydroxy group-containing polyfunctional (meth)acrylate (B) and the structural unit derived from a polyalkylene glycol glycol (C) through a urethane bond. Accordingly, the UV-curable oligomer can be provided with excellent UV curability, coating film performance, substrate fixability, and water dispersion stability.

As described above, as a preferred mode of the compound (B'), a hydroxy group-containing polyfunctional (meth)acrylate (B) can be mentioned, but a preferred mode of the compound (B') may also be "compound (B") containing a hydroxy group and two or more polymerizable unsaturated bonds".

"Compound capable of bonding with a polyisocyanate compound (A)" as the compound (B') may also be the compound (B") with its hydroxy group being substituted with a carboxy group, an amino group, or the like. In addition, as the polymerizable unsaturated bond, a carbon-carbon double bond and a carbon-carbon triple bond can be mentioned, and, among them, a carbon-carbon double bond is preferable. More specifically, a carbon-carbon double bond derived from a vinyl group, a (meth)acryloyl group, or the like can be mentioned.

A water-soluble compound as the compound (C') encompasses a water-soluble polymer. Specifically, polyglycerin, polyhydroxy (meth)acrylate, polyamine, quaternary aminated polystyrene, sulfonated polystyrene, polyether, polyalkylene glycols, and the like can be mentioned. Among them, polyglycerin, polyhydroxy (meth)acrylate, and polyalkylene glycols, which are nonionic water-soluble compounds, are preferable, and polyalkylene glycols are particularly preferable. These water-soluble compounds may each be a copolymer. The compound (C') has the structure of such a water-soluble compound structure and the structure of "compound capable of bonding with a polyisocyanate compound (A)". Here, the structure of "compound capable of bonding with a polyisocyanate compound (A)" can be selected from the same structures as those shown above as examples of the compound (B).

In addition, although a structural unit derived from a polyisocyanate compound (A) forms urethane bonds through bonding with a structural unit derived from a hydroxy group-containing polyfunctional (meth)acrylate (B) and a structural unit derived from a polyalkylene glycol (C), such urethane bonds may each be substituted with a urea bond or an amide bond.

In the case where a urea bond is formed, the hydroxy group in the hydroxy group-containing polyfunctional (meth)acrylate (B) may be substituted with an amino group as a compound (B'), or the hydroxyl terminus constituting the polyalkylene glycol (C) may be substituted with an amino group as a compound (C').

In the case where an amide bond is formed, the hydroxy group in the hydroxy group-containing polyfunctional (meth)acrylate (B) may be substituted with a carboxy group as a compound (B'), or the hydroxyl terminus constituting the polyalkylene glycol (C) may be substituted with a carboxy group as a compound (C'). Incidentally, instead of converting a hydroxy group in this way, it is also possible to previously directly use a compound capable of forming a urea bond or an amide bond, thereby giving substantially the same chemical structure.

As described above, the structural unit derived from a polyisocyanate compound (A) contributes to the adhesion of a printed film to a recording medium. This is believed to be attributable to, as described above, the isocyanate group in the polyisocyanate compound (A) forming a polar site such as a urethane bond, a urea bond, an amide bond, or the like in the UV-curable oligomer.

In the present invention, in the case where the hydroxy group-containing polyfunctional (meth)acrylate (B) is formed into a compound (B') or a compound (B"), or in the case where the polyalkylene glycol (C) is formed into a compound (C'), as a preferred mode or a specific mode at that time, the below-described preferred modes or specific modes in the case of using a hydroxy group-containing polyfunctional (meth)acrylate (B) or a polyalkylene glycol (C) can be applied in the same manner.

Hereinafter, the compounds constituting the UV-curable oligomer will each be described. In the present invention, the term "oligomer" is not limited to a specific molecular weight range or the like and only needs to have the structures shown below.

Incidentally, the ink of the present invention may include only one UV-curable oligomer, and may also include two or more kinds.

### <Polyisocyanate Compound (A)>

The polyisocyanate compound (A) is a compound having a total of two or more isocyanate groups in one molecule.

There are no particular restrictions on the kind of polyisocyanate compound (A), and linear aliphatic polyisocyanates, aromatic polyisocyanates, alicyclic polyisocyanates, and the like can be mentioned. Among them, from the viewpoint of weather resistance and hardness, the polyisocyanate compound (A) preferably contains a trimer compound of a polyisocyanate.

A linear aliphatic polyisocyanate is a compound having a linear aliphatic structure and two or more isocyanate groups. Linear aliphatic polyisocyanates are preferable from the viewpoint of weather resistance and stretchability. The linear aliphatic structure in a linear aliphatic polyisocyanate is not particularly limited, but is preferably a linear or branched C₁₋₁₂, preferably C₁₋₆, alkylene group. As linear aliphatic polyisocyanates, for example, aliphatic diisocyanates such as tetramethylene diisocyanate, hexamethylene diisocyanate, trimethylhexamethylene diisocyanate, and dimer acid diisocyanate, as well as trimer compounds of these polyisocyanates, can be mentioned.

An aromatic polyisocyanate is a compound having an aromatic structure and two or more isocyanate groups. Aromatic polyisocyanates are preferable from the viewpoint of coating film strength. The aromatic structure in an aromatic polyisocyanate is not particularly limited, but is preferably a C₆₋₁₃ aromatic structure. As aromatic polyisocyanates, for example, aromatic diisocyanates such as tolylene diisocyanate, xylylene diisocyanate, diphenylmethane diisocyanate, m-phenylene diisocyanate, and naphthalene diisocyanate, as well as trimer compounds of these polyisocyanates, can be mentioned.

An alicyclic polyisocyanate is a compound having an alicyclic structure and two or more isocyanate groups. The alicyclic structure in an alicyclic polyisocyanate is not particularly limited, but the number of its carbon atoms is usually 5 or more, preferably 6 or more, and usually 15 or less, preferably 14 or less, and more preferably 13 or less. The alicyclic structure is particularly preferably a cycloalkylene group. As alicyclic polyisocyanates, for example, diisocyanates having an alicyclic structure, such as bis(isocyanatomethyl)cyclohexane, cyclohexane diisocyanate, bis(isocyanatocyclohexyl)methane, and isophorone diisocyanate, as well as trimer compounds of these polyisocyanates, can be mentioned.

In the UV-curable oligomer, one of these polyisocyanate compounds (A) may be used alone, and it is also possible to use two or more kinds together. In addition, as the polyisocyanate compound (A), a polyisocyanate having two or more kinds of structures selected from a linear aliphatic structure, an aromatic structure, and an alicyclic structure can also be used.

As the polyisocyanate compound (A), particularly from the viewpoint of adhesion with a substrate, one having three or more isocyanate groups is preferable, while one having six or less isocyanate groups is preferable. In addition, as the polyisocyanate compound (A), a trimer obtained by a trimerization reaction from hexamethylene diisocyanate, trimethylhexamethylene diisocyanate, phenylene diisocyanate, or the like is preferable, and a trimer of hexamethylene diisocyanate is particularly preferable.

In a second embodiment of the ink of the present invention, it is preferable that the UV-curable oligomer has a structural unit derived from a polyisocyanate compound (A), and the compound (A) is a compound having three or more isocyanate groups in one molecule.

### <Polymerizable Unsaturated Bond-Containing Compound>

In the polymerizable unsaturated bond-containing compound, the number of polymerizable unsaturated bonds is preferably 1 or more, more preferably 2 or more, and still more preferably 4 or more. Meanwhile, the number is preferably 8 or less, and more preferably 6 or less.

In addition, the polymerizable unsaturated bond-containing compound is preferably a compound capable of bonding with the polyisocyanate compound (A).

### (Compound (B'))

The compound (B') is a compound containing two or more polymerizable unsaturated bonds and capable of bonding with a polyisocyanate compound (A).

As the compound (B'), a compound having a hydroxy group, an amino group, or a carboxy group can be mentioned. In addition, as the compound (B'), polyfunctional vinyl monomers, polyfunctional allyl monomers, and polyfunctional (meth)acrylates can be mentioned. Among them, as the compound (B'), a hydroxy group-containing polyfunctional (meth)acrylate (B) is preferable.

### <Hydroxy Group-Containing Polyfunctional (Meth)Acrylate (B)>

A hydroxy group-containing polyfunctional (meth)acrylate (B) has one or more hydroxy groups and two or more (meth)acryloyl groups. Specifically, (meth)acrylic acid partial esters of polyhydric alcohols can be mentioned. A polyfunctional (meth)acrylate having a hydroxy group form an excellent crosslinked structure due to the involvement of several (meth)acryloyl groups in a curing reaction, making it possible to improve physical properties such as stain resistance and abrasion resistance.

The number of hydroxy groups in the hydroxy group-containing polyfunctional (meth)acrylate (B) is preferably 3 or less, more preferably 2 or less, and still more preferably 1. The number of (meth)acryloyl groups in the hydroxy group-containing polyfunctional (meth)acrylate (B) is preferably 8 or less, and more preferably 6 or less.

As the hydroxy group-containing polyfunctional (meth)acrylate (B), for example, pentaerythritol tri(meth)acrylate, dipentaerythritol penta(meth)acrylate, caprolactone-modified dipentaerythritol penta(meth)acrylate, caprolactone-modified pentaerythritol tri(meth)acrylate, ethylene oxide-modified dipentaerythritol penta(meth)acrylate, ethylene oxide-modified pentaerythritol tri(meth)acrylate, 2 -hydroxy-1,3- dimethacryloxyprop ane, 2 -hydroxy- 3- acryloyloxypropyl methacrylate, and the like can be mentioned.

For the production of the UV-curable oligomer, one of these hydroxy group-containing polyfunctional (meth)acrylates (B) may be used alone, and it is also possible to use two or more kinds together.

As the hydroxy group-containing polyfunctional (meth)acrylate (B), particularly from the viewpoint of the coating film strength of the resulting cured film, those having one hydroxy group and three or more and five or less (meth)acryloyl groups, such as dipentaerythritol penta(meth)acrylate and pentaerythritol tri(meth)acrylate, are preferable. In particular, in terms of forming an excellent crosslinked structure to enhance the mechanical strength of the cured film, dipentaerythritol penta(meth)acrylate is preferable.

### <Water-Soluble Compound>

### (Compound (C'))

The compound (C') is a water-soluble compound capable of bonding with a polyisocyanate compound (A).

The compound (C') is preferably a compound having one hydroxy-terminated end because this results in excellent water dispersibility.

As the compound (C'), as described above, water-soluble polymers can be mentioned, and, among them, a polyalkylene glycol (C) is particularly preferable.

The polyalkylene glycol (C) is not limited, but preferably has a monosubstituted structure. That is, it is preferable that one hydroxy group of the glycol is substituted. The substituted structure is preferably a structure that does not bond with an isocyanate.

The polyalkylene glycol (C) may also be a mixture of a compound having a monosubstituted structure and a compound having no monosubstituted structure.

Although the monosubstituted structure is not limited, from the viewpoint of making the UV-curable oligomer nonionic, polyalkylene glycol monosubstituted ethers are preferable, polyethylene glycol monosubstituted ethers, polytrimethylene glycol monosubstituted ethers, and polypropylene glycol monosubstituted ethers are more preferable, and polyethylene glycol monosubstituted ethers are still more preferable.

The molecular weight of the polyalkylene glycol (C) (number average molecular weight when more than one) is not limited, but is usually 100 or more, preferably 200 or more, and usually 5,000 or less, preferably 2,000 or less.

Among polyalkylene glycol monosubstituted ethers, polyalkylene glycol monosubstituted ethers containing no ionic substituent at the ether moiety are more preferable, and one represented by the following general formula (1) is more preferable, for example.

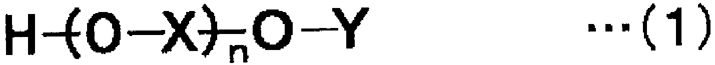

(In formula (1), X is an alkylene group, Y is an alkyl group, a (meth)acryloyl group, an allyl group, an acyl group, or a hydrogen atom, and n is an integer of 2 or more.)

Specific examples of polyalkylene glycol monosubstituted ethers represented by the above general formula (1) are as follows, for example.

When Y = an alkyl group: polyethylene glycol monomethyl ether, polyethylene glycol lauryl ether, polyethylene glycol cetyl ether, polyethylene glycol stearyl ether, polyethylene glycol tridecyl ether, polyethylene glycol oleyl ether, polyethylene glycol octylphenyl ether, polyoxyethylene oleyl cetyl ether, polypropylene glycol monomethyl ether, etc.

When Y = a (meth)acryloyl group: polyethylene glycol mono(meth)acrylate, polypropylene glycol mono(meth)acrylate, poly(ethylene glycol-propylene glycol) mono(meth)acrylate, poly(ethylene glycol-tetramethylene glycol) mono(meth)acrylate, poly(propylene glycol-tetramethylene glycol) mono(meth)acrylate, etc.

When Y = an allyl group: polyethylene glycol monoallyl ether, polypropylene glycol monoallyl ether, poly(ethylene glycol-propylene glycol) monoallyl ether, etc.

When Y = an acyl group: polyethylene glycol monolaurate, polypropylene glycol monolaurate, poly(ethylene glycol-propylene glycol) monolaurate, polyethylene glycol monostearate, polyethylene glycol monooleate, etc.

Among them, X in general formula (1) is preferably a C₁₋₃ alkylene group, more preferably an ethylene group, a trimethylene group, or a propylene group, and, from the viewpoint of pigment dispersion stability or storage stability at high temperatures, still more preferably an ethylene group. In addition, from the viewpoint of coating film strength, Y is preferably a (meth)acryloyl group, an allyl group, or an acyl group, and more preferably an allyl group.

n in general formula (1) is, from the viewpoint of the coating film strength of the resulting cured film, usually 2 or more, preferably 5 or more, and more preferably 6 or more, and usually 500 or less, preferably 100 or less, and more preferably 50 or less.

In the first embodiment of the ink of the present invention, it is preferable that the UV-curable oligomer has a structural unit derived from a compound represented by the above formula (1), wherein X is an alkylene group, Y is a (meth)acryloyl group, an allyl group, an acyl group, or a hydrogen atom, and n is an integer of 2 or more.

For the production of the UV-curable oligomer, one of these polyalkylene glycols (C) may be used alone, and it is also possible to use two or more kinds together. The polyalkylene glycol (C) may also be a mixture of different molecular weights (compounds with different values of n in general formula (1)).

### <Method for Producing UV-Curable Oligomer>

The method for producing a UV-curable oligomer is not particularly limited, but it is preferably produced by reacting the polyisocyanate compound (A), compound (B'), and compound (C') described above so that they form chemical bonds.

In the case where the compound (B') is a hydroxy group-containing polyfunctional (meth)acrylate (B) and the compound (C') is a polyalkylene glycol (C), a UV-curable oligomer is preferably produced by reacting the polyisocyanate compound (A), hydroxy group-containing polyfunctional (meth)acrylate (B), and polyalkylene glycol (C) described above so that the isocyanate group of the polyisocyanate compound (A) forms urethane bonds with the hydroxy group of the hydroxy group-containing polyfunctional (meth)acrylate (B) and also with the hydroxy group of the polyalkylene glycol (C).

In the present invention, from the viewpoint of pigment dispersion stability and the coating film strength of the resulting cured film, the oligomer is preferably such that relative to the polyisocyanate compound (A), two hydroxy group-containing polyfunctional (meth)acrylates (B) and one polyalkylene glycol (C) form urethane bonds.

Incidentally, in the UV-curable oligomer, as long as it has a structural unit derived from a polyisocyanate compound (A), a structural unit derived from a hydroxy group-containing polyfunctional (meth)acrylate (B), and a structural unit derived from a polyalkylene glycol (C), other structures may additionally be present.

### <Weight Average Molecular Weight>

In the UV-curable oligomer, from the viewpoint of the formed coating film performance and handleability, the polystyrene-equivalent weight average molecular weight measured by gel permeation chromatography (GPC) is preferably 1,000 or more, and more preferably 2,000 or more, and is preferably 100,000 or less, and more preferably 50,000 or less.

### <Average Particle Size>

In the ink, below-described dispersion (oligomer dispersion), and below-described water-based composition of the present invention, the UV-curable oligomer is preferably present as particles, more preferably present as particles having an average particle size of 10 nm or more and 200 nm or less, and still more preferably present as particles of 20 nm or more and 150 nm or less. When the average particle size of the UV-curable oligomer is within the above range, this results in excellent dispersion stability.

Here, the average particle size of a UV-curable oligomer is, for example, the volume average particle size (D₅₀) measured by the dynamic light scattering method using a particle size measuring device.

Incidentally, in the Examples below, the average particle size of UV-curable oligomer particles in a UV-curable oligomer aqueous dispersion is measured. This average particle size of oligomer particles in an aqueous dispersion is almost the same as the average particle size of oligomer particles in an ink.

In the ink, below-described dispersion (oligomer dispersion), and below-described water-based composition of the present invention, as long as the UV-curable oligomer is present as particles, even if aggregation has occured, or other substances are contained in the particles, such a state is also encompassed by the state of "being present as particles".

In addition, the average particle size of a UV-curable oligomer described above means the particle size of such UV-curable oligomer particles (primary particle size).

Hereinafter, components contained in the ink of the present invention other than the UV-curable oligomer will be described.

### [Colorant]

The ink of the present invention includes a colorant.

As the colorant used in the ink of the present invention, various dyes and pigments known as colorants for use in inks can be used. However, from the viewpoint of UV irradiation and the long-term storage durability of a printed image, it is preferable to use a pigment.

### <Dye>

There are no particular restrictions on dyes that can be used in the present invention, and water-soluble dyes such as acid dyes, direct dyes, and reactive dyes, disperse dyes, and the like can be mentioned. Among them, anionic dyes are preferable.

### (Water-Soluble Dye)

As water-soluble dyes, for example, azo dyes, methine dyes, azomethine dyes, xanthene dyes, quinone dyes, phthalocyanine dyes, triphenylmethane dyes, diphenylmethane dyes, and the like can be mentioned. Their specific compounds are as shown below, but are not limited to these example compounds.

### <C.I. Acid Yellow>

1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246

### <C.I. Acid Orange>

3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168

### <C.I. Acid Red>

88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415

### <C.I. Acid Violet>

17, 19, 21, 42, 43, 47, 48, 49, 54, 66, 78, 90, 97, 102, 109, 126

### <C.I. Acid Blue>

1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350

### <C.I. Acid Green>

9, 12, 16, 19, 20, 25, 27, 28, 40, 43, 56, 73, 81, 84, 104, 108, 109

### <C.I. Acid Brown>

2, 4, 13, 14, 19, 28, 44, 123, 224, 226, 227, 248, 282, 283, 289, 294, 297, 298, 301, 355, 357, 413

### <C.I. Acid Black>

1, 2, 3, 24, 26, 31, 50, 52, 58, 60, 63, 107, 109, 112, 119, 132, 140, 155, 172, 187, 188, 194, 207, 222

### <C.I. Direct Yellow>

8, 9, 10, 11, 12, 22, 27, 28, 39, 44, 50, 58, 79, 86, 87, 98, 105, 106, 130, 132, 137, 142, 147, 153

### <C.I. Direct Orange>

6, 26, 27, 34, 39, 40, 46, 102, 105, 107, 118

### <C.I. Direct Red>

2, 4, 9, 23, 24, 31, 54, 62, 69, 79, 80, 81, 83, 84, 89, 95, 212, 224, 225, 226, 227, 239, 242, 243, 254

### <C.I. Direct Violet>

9, 35, 51, 66, 94, 95

### <C.I. Direct Blue>

1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291

### <C.I. Direct Green>

26, 28, 59, 80, 85

### <C.I. Direct Brown>

44, 106, 115, 195, 209, 210, 222, 223

### <C.I. Direct Black>

17, 19, 22, 32, 51, 62, 108, 112, 113, 117, 118, 132, 146, 154, 159, 169

### <C.I. Basic Yellow>

1, 2, 11, 13, 15, 19, 21, 28, 29, 32, 36, 40, 41, 45, 51, 63, 67, 70, 73, 91

### <C.I. Basic Orange>

2, 21, 22

### <C.I. Basic Red>

1, 2, 12, 13, 14, 15, 18, 23, 24, 27, 29, 35, 36, 39, 46, 51, 52, 69, 70, 73, 82, 109

### <C.I. Basic Violet>

1, 3, 7, 10, 11, 15, 16, 21, 27, 39

### <C.I. Basic Blue>

1, 3, 7, 9, 21, 22, 26, 41, 45, 47, 52, 54, 65, 69, 75, 77, 92, 100, 105, 117, 124, 129, 147, 151

### <C.I. Basic Green>

1, 4

### <C.I. Basic Brown>

1

### <C.I. Reactive Yellow>

2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176

### <C.I. Reactive Orange>

1, 4, 5, 7, 11, 12, 13, 15, 16, 20, 30, 35, 56, 64, 67, 69, 70, 72, 74, 82, 84, 86, 87, 91, 92, 93, 95, 107

### <C.I. Reactive Red>

2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235

### <C.I. Reactive Violet>

1, 2, 4, 5, 6, 22, 23, 33, 36, 38

### <C.I. Reactive Blue>

2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236

### <C.I. Reactive Green>

8, 12, 15, 19, 21

### <C.I. Reactive Brown>

2, 7, 9, 10, 11, 17, 18, 19, 21, 23, 31, 37, 43, 46

### <C.I. Reactive Black>

5, 8, 13, 14, 31, 34, 39

### <C.I. Food Black>

1, 2

### <Pigment>

As pigments, conventionally known organic and inorganic pigments can be used. For example, organic pigments including azo pigments such as azo lakes, insoluble azo pigments, condensed azo pigments, and chelate azo pigments, polycyclic pigments such as phthalocyanine pigments, perylene and perylene pigments, anthraquinone pigments, quinacridone pigments, dioxazine pigments, thioindigo pigments, isoindolinone pigments, and quinophthalone pigments, dye lakes such as basic dye type lakes and acid dye type lakes, nitro pigments, nitroso pigments, aniline black, daylight fluorescent pigments, etc., and inorganic pigments including carbon black, titanium oxide, iron oxide-based pigments, etc., can be mentioned, and anionic pigments are preferable.

### (Organic Pigment)

Examples of specific organic pigments are shown below.

### <Pigment for Magenta or Red>

C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222, etc.

### <Pigment for Orange or Yellow>

C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 155, etc.

### <Pigment for Green or Cyan>

C.I. Pigment Blue 15, C.I. Pigment Blue 15:2, C.I. Pigment Blue 15:3, C.I. Pigment Blue 16, C.I. Pigment Blue 60, C.I. Pigment Green 7, etc.

One of these dyes and pigments may be used alone, and it is also possible to use two or more kinds together.

### [Mercapto Compound]

The ink of the present invention includes a mercapto compound.

The ink of the present invention includes a mercapto compound and thus is an ink excellent in alcohol resistance and scratch resistance. The reason for this is inferred to be as follows. In a UV-curable water-based ink, a mercapto compound is believed to act as a chain transfer agent. Specifically, because of the presence of a mercapto compound, the distance between crosslinks in the UV-curable oligomer is increased, allowing for uniform curing to the depth of the ink film. This is believed to increase the toughness, that is, suppleness, of the ink film and thus improve coating film strength, giving an ink excellent in alcohol resistance and scratch resistance.

A mercapto compound is a compound having one or more thiol groups in its molecule, and, for example, any of monofunctional thiols having one thiol group in the molecule and polyfunctional thiols having two or more thiol groups in the molecule, such as bifunctional, trifunctional, and tetrafunctional thiols, may be used, but polyfunctional thiols are preferable. Among them, mercapto compounds having two to four thiol groups are preferable.

Examples of monofunctional thiols include, but are not particularly limited to, mercaptoacetic acid, 2-mercaptopropionic acid, 3-mercaptopropionic acid, methyl mercaptopropionate, octyl mercaptopropionate, methoxybutyl mercaptopropionate, tridecyl mercaptopropionate, thioglycolic acid, ammonium thioglycolate, monoethanolamine thioglycolate, sodium thioglycolate, methyl thioglycolate, octyl thioglycolate, methoxybutyl thioglycolate, 2-mercaptobenzothiazole, 2-mercaptobenzoxazole, 2-mercaptobenzimidazole, 5-phenyl-2-benzoxazolethiol, 6-methyl-2-benzoxazolethiol, 4-amino-5-methyl-2-pyridinethiol, thiophenol, 2-mercaptobenzyl alcohol, 2-phenoxythiophenol, 3-mercaptophenanthrene, 3-mercapto-1,2,4-triazole, 2-mercapto-4(3H)-quinazoline, and β-mercaptonaphthalene.

Examples of polyfunctional thiols include, but are not particularly limited to, alkanepolythiol compounds such as 1,2-ethanedithiol, 1,3-propanedithiol, 1,4-butanedithiol, 2,3-butanedithiol, 1,5-pentanedithiol, 1,6-hexanedithiol, 1,8-octanedithiol, 1,9-nonanedithiol, and decanedithiol; cycloalkanepolythiol compounds such as 1,2-cyclohexanedithiol; 1,4-butanediol bis(mercaptoacetate), ethylene glycol bis(mercaptoacetate), trimethylolpropane tris(mercaptoacetate), and pentaerythritol tetrakis(mercaptoacetate); 1,4-butanediol bis(3-mercaptopropionate), ethylene glycol bis(3-mercaptopropionate), trimethylolpropane tris(3-mercaptopropionate), pentaerythritol tetrakis(3-mercaptopropionate), dipentaerythritol hexakis(3-mercaptopropionate), ethylene glycol bis(2-mercaptopropionate), 1,2-propylene glycol bis(2-mercaptopropionate), diethylene glycol bis(2-mercaptopropionate), 1,4-butanediol bis(2-mercaptopropionate), 1,8-octanediol bis(2-mercaptopropionate), trimethylolpropane tris(2-mercaptopropionate), tetraethylene glycol bis(3-mercaptopropionate), pentaerythritol tetrakis(2-mercaptopropionate), dipentaerythritol hexakis(2-mercaptopropionate), dipentaerythritol hexathiopropionate, and other ester compounds of polyhydric alcohols and mercaptopropionic acid; ethylene glycol bis(3-mercaptobutyrate), 1,2-propylene glycol bis(3-mercaptobutyrate), diethylene glycol bis(3-mercaptobutyrate), 1,4-butanediol bis(3-mercaptobutyrate), 1,8-octanediol bis(3-mercaptobutyrate), trimethylolpropane tris(3-mercaptobutyrate), pentaerythritol tetrakis(3-mercaptobutyrate), and dipentaerythritol hexakis(3-mercaptobutyrate); 1,4-bis(3-mercaptobutyryloxy)butane, as well as ester compounds of mercapto group-containing carboxylic acids and polyhydric alcohols, such as ethylene glycol bis(2-mercaptoisobutyrate), 1,2-propylene glycol bis(2-mercaptoisobutyrate), diethylene glycol bis(2-mercaptoisobutyrate), 1,4-butanediol bis(2-mercaptoisobutyrate), 1,8-octanediol bis(2-mercaptoisobutyrate), trimethylolpropane tris(2-mercaptoisobutyrate), pentaerythritol tetrakis(2-mercaptoisobutyrate), dipentaerythritol hexakis(2-mercaptoisobutyrate), ethylene glycol bis(3-mercaptoisobutyrate), 1,2-propylene glycol bis(3-mercaptoisobutyrate), diethylene glycol bis(3-mercaptoisobutyrate), 1,4-butanediol bis(3-mercaptoisobutyrate), 1,8-octanediol bis(3-mercaptoisobutyrate), trimethylolpropane tris(3-mercaptoisobutyrate), pentaerythritol tetrakis(3-mercaptoisobutyrate), dipentaerythritol hexakis(3-mercaptoisobutyrate), ethylene glycol bisthioglycolate, ethylene glycol bisthioglycolate, trimethylolpropane tristhioglycolate, and pentaerythritol tetrakisthioglycolate; aromatic polythiol compounds such as 1,4-dimethylmercaptobenzene, dimercaptobenzene, trimercaptobenzene, 1,4-di(mercaptomethyl)benzene, 1,4-bis(2-mercaptoethyl)benzene, 1,2-benzenedimethanethiol, 1,3-benzenedimethanethiol, 1,4-benzenedimethanethiol, and 2,4,6-trimethyl-1,3-benzenedimethanethiol; heterocyclic polythiol compounds such as 2,4,6-trimercapto-s-triazine, 2,4,6-trimercapto-1,3,5-triazine, 2-(N,N-dibutylamino)-4,6-dimercapto-s-triazine, and 1,3,5-tris(3-mercaptobutyloxyethyl)-1,3,5-triazine-2,4,6-(1H,3H,5H)-trione; and trimercaptopropionic acid tris(2-hydroxyethyl)isocyanurate and tris-[(3-mercaptopropionyloxy)-ethyl] -isocyanurate.

In addition, the mercapto compound may be any of primary thiols, secondary thiols, and tertiary thiols. Among them, secondary thiols and tertiary thiols are preferable because they have low reactivity, and the storage stability of the ink, dispersion, or water-based composition of the present invention can be maintained. Secondary thiols are particularly preferable.

As mercapto compounds, more specifically, 1,4-bis(3-mercaptobutyryloxy)butane, 1,3,5-tris(3-mercaptobutyloxyethyl)-1,3,5-triazine-2,4,6-(1H,3H,5H)-trione, pentaerythritol tetrakis(3-mercaptobutyrate), and trimethylolpropane tris(3-mercaptobutyrate), which are polyfunctional secondary thiols, have high curability and excellent storage stability and thus are preferable.

As commercially available products of polyfunctional primary thiols, for example, EGMP-4 (tetraethylene glycol bis(3-mercaptopropionate)), TMMP (trimethylolpropane tris(3-mercaptopropionate)), TEMPIC (tris-[(3-mercaptopropionyloxy)-ethyl]-isocyanurate), PEMP (pentaerythritol tetrakis(3-mercaptopropionate)), and DPMP (dipentaerythritol hexakis(3-mercaptopropionate)) (all manufactured by Sakai Chemical Industry Co., Ltd.) can be mentioned.

As commercially available products of polyfunctional secondary thiols, for example, Karenz MTO BD-1 (1,4-bis(3-mercaptobutyryloxy)butane), NR-1 (1,3,5-tris(3-mercaptobutyloxyethyl)-1,3,5-triazine-2,4,6-(1H,3H,5H)-trione), PE-1 (pentaerythritol tetrakis(3-mercaptobutyrate)), and TPMB (trimethylolpropane tris(3-mercaptobutyrate)) (all manufactured by Showa Denko K.K.) can be mentioned.

As commercially available products of monofunctional primary thiols, for example, Sanceler M and Sanceler M-G (2-mercaptobenzothiazole) (all manufactured by Sanshin Chemical Industry Co., Ltd.) can be mentioned.

Further, from the viewpoint of reducing the odor of the ink and printed articles, the mercapto compound preferably has low volatility. Therefore, the boiling point of the mercapto compound is preferably 200°C or more, more preferably 220°C or more, and still more preferably 250°C or more.

The molecular weight of the mercapto compound is preferably 150 or more, and more preferably 200 or more. Meanwhile, the molecular weight of the mercapto compound is preferably 2,000 or less, and more preferably 1,500 or less.

One mercapto compound may be used alone, and it is also possible to use a combination of two or more kinds.

In the ink of the present invention, the mercapto compound is preferably dispersed in the form of being encapsulated in particles of the UV-curable oligomer. As a result, the mercapto compound, which generally has the property of being poorly soluble in water, can be favorably contained in the water-based ink. In order to encapsulate a mercapto compound in the UV-curable oligomer, for example, during the emulsification of the UV-curable oligomer, the mercapto compound may coexist and be emulsified.

### [Water-Based Medium]

The ink of the present invention is a water-based ink, and "water-based ink" means an ink containing a water-based medium. A water-based medium is water and/or a water-soluble organic solvent.

The water-based medium used in the present invention is preferably water or a mixture of water and a water-soluble organic solvent.

Some water-soluble organic solvents function as moisturizing solvents to enhance the moisture retention and wettability of the ink, while others are used as water-based media to adjust the viscosity of the ink and improve handleability and ejectability. However, they are not clearly distinguished, and a water-soluble organic solvent used as a moisturizing solvent also functions as a water-based medium.

Incidentally, in the present invention, a water-soluble organic solvent means a compound that is soluble in water. The solubility in water is not limited, but a compound that can be dissolved in water in any proportion is preferable. In addition, even if a compound is difficult to have solvent characteristics by itself (e.g., a compound that is solid or highly viscous at room temperature), as long as the compound can be uniformly mixed with water and thus used as a solvent, such a compound is encompassed by water-soluble organic solvents.

As water-soluble organic solvents, for example, polyhydric alcohols, ethers such as polyhydric alcohol alkyl ethers and polyhydric alcohol aryl ethers, nitrogen-containing heterocyclic compounds, amides, amines, sulfur-containing compounds, and the like can be mentioned.

As specific examples of water-soluble organic solvents, for example, polyhydric alcohols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monomethyl ether, and propylene glycol monoethyl ether; polyhydric alcohol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methyl formamide, N,N-dimethyl formamide, 3-methoxy-N,N-dimethyl propionamide, and 3-butoxy-N,N-dimethyl propionamide; amines such as monoethanolamine, diethanolamine, and triethylamine; sulfur-containing compounds such as dimethylsulfoxide, sulfolane, and thiodiethanol; propylene carbonate, ethylene carbonate, and the like can be mentioned.

As a water-soluble organic solvent, it is preferable to use an organic solvent having a boiling point of 250°C or less because it not only functions as a moisturizing solvent but also provides excellent dryness.

As water-soluble organic solvents, Cs or higher polyol compounds and glycol ether compounds are also favorably used.

As specific examples of Cs or higher polyol compounds, 2-ethyl-1,3-hexanediol, 2,2,4-trimethyl-1,3-pentanediol, and the like can be mentioned.

As specific examples of glycol ether compounds, polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, tetraethylene glycol monomethyl ether, and propylene glycol monoethyl ether; polyhydric alcohol aryl ethers such as ethylene glycol monophenyl ether and ethylene glycol monobenzyl ether; and the like can be mentioned.

One of these water-soluble organic solvents may be used alone, and it is also possible to use a mixture of two or more kinds.

### [Polymerization Initiator]

The ink of the present invention preferably contains a polymerization initiator.

The polymerization initiator is a photo-radical polymerization initiator that generates radicals, which are active species, in response to the optical (ultraviolet) energy received as result of UV irradiation, and initiates the photopolymerization of a UV-curable oligomer. As a result, the ink present on the surface of a recording medium can cure to form an image.

The polymerization initiator may be contained in the ink in the state of being not encapsulated in the UV-curable oligomer, or may also be contained in the ink in the state of being encapsulated in particles of the UV-curable oligomer. Further, it may also be contained in both of these states.

The polymerization initiator may be a fat-soluble polymerization initiator (hereinafter, sometimes referred to as a "fat-soluble initiator") or a water-soluble polymerization initiator (hereinafter, sometimes referred to as a "water-soluble initiator").

Here, "fat-soluble initiator" refers to a polymerization initiator that is compatible with a UV-curable oligomer or dissolves in an organic solvent, and "water-soluble initiator" refers to an initiator that 1 mass% or more dissolves in water. The same applies to the "fat-soluble sensitizer" and "water-soluble sensitizer" described below.

Examples of polymerization initiators used in the present invention include, but are not limited to, aromatic ketones, acylphosphine oxide compounds, aromatic onium salt compounds, organic peroxides, thiocompounds (thioxanthone compounds, thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

Among them, at least either of an acylphosphine oxide compound and a thioxanthone compound is preferably contained as the polymerization initiator. As a result of using such a polymerization initiator, it tends to be possible to further improve the curability of the ink.

Examples of fat-soluble polymerization initiators include, but are not limited to, acetophenone, 2,2-diethoxyacetophenone, p-dimethylamino acetophenone, benzophenone, 2-chlorobenzophenone, p,p'-dichlorobenzophenone, p,p'-bisdiethylaminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, 2,2-dimethoxy-1,2-diphenylethan-1-one, 1-hydroxycyclohexylphenylketone, 2 - hydroxy-1-{4- [4-(2 - hydroxy-2-methylpropionyl)benzyl]phenyl}2 -methylpropan-1 -one, 2-benzyl-2-dimethylamino-1-(4-morpholinophenyl)butanone-1, 2-dimethylamino-2-(4-methylbenzyl)-1-(4-morpholin-4-yl-phenyl)butan-1-one, 2,4,6-trimethylbenzoyldiphenylphosphine oxide, bis(2,4,6-trimethylbenzoyl)phenylphosphine oxide, bis(2,6-dimethoxybenzoyl)-2,4,4-trimethylpentylphosphine oxide, 2-methyl-1-[4-(methylthio)phenyl]2-morpholinopropan-1-one, thioxanthone, 2-chlorothioxanthone, 2-methylthioxanthone, 2-isopropylthioxanthone, 4-isopropylthioxanthone, 2-hydroxy-2-methyl-1-phenyl-1-one, 1-(4-isopropylphenyl)-2-hydroxy-2-methylpropan-1-one, methyl benzoylformate, azobisisobutyronitrile, benzoyl peroxide, and di-tert-butyl peroxide.

Examples of water-soluble polymerization initiators include, but are not limited to, 1-[4-(2-hydroxyethoxy)-phenyl]-2-hydroxy-2-methyl-1-propan-1-one, sodium phenyl(2,4,6-trimethylbenzoyl)phosphinate, and 2-(3-dimethylamino-2-hydroxypropoxy)-3,4-dimethyl-9H-thioxanthon-9-one methochloride.

As commercially available products of polymerization initiators, for example, GENOPOL TX-2 manufactured by RAHN, Irgacure 369, Irgacure 500, and Irgacure 2959 manufactured by Ciba Specialty Chemicals, and the like can be mentioned.

One polymerization initiator may be used alone, and it is also possible to use two or more kinds together. For example, it is possible that a fat-soluble initiator and a water-soluble initiator are used together, and the fat-soluble initiator is encapsulated in particles of the UV-curable oligomer, while the water-soluble initiator is dissolved in the water-based medium.

In addition, as the polymerization initiator, in addition to a photo-radical polymerization initiator as described above, a thermo-radical polymerization initiator may also be used together.

### [Surfactant]

The ink of the present invention preferably contains a surfactant for the sake of the flatness of the formed coating film and wettability to the substrate.

As the surfactant, any of silicone-based surfactants, fluorosurfactants, amphoteric surfactants, nonionic surfactants, and anionic surfactants can be used.

Silicone-based surfactants can be suitably selected according to the purpose without any particular restrictions. Among them, those that do not decompose even at high pH are preferable, and, for example, side-chain-modified polydimethylsiloxane, both-ends-modified polydimethylsiloxane, one-end-modified polydimethylsiloxane, side-chain/both-ends-modified polydimethylsiloxane, and the like can be mentioned. Those having a polyoxyethylene group or a polyoxyethylene polyoxypropylene group as a modifying group exhibit excellent properties as water-based surfactants and thus are particularly preferable. A polyether-modified silicone-based surfactant can also be used as a silicone-based surfactant, and, for example, a compound having a polyalkylene oxide structure introduced into the Si-moiety side chain of dimethylsiloxane, etc., can be mentioned.

As fluorosurfactants, fluorine-substituted C₂₋₁₆ compounds are preferable, and fluorine-substituted C₄₋₁₆ compounds are more preferable.

As fluorosurfactants, for example, perfluoroalkyl sulfonic acid compounds, perfluoroalkyl carboxylic acid compounds, perfluoroalkyl phosphate ester compounds, perfluoroalkyl alkylene oxide adducts, and polyoxyalkylene ether polymer compounds having a perfluoroalkyl ether group in the side chain have low foamability and thus are preferable. As perfluoroalkyl sulfonic acid compounds, for example, perfluoroalkyl sulfonic acids, perfluoroalkyl sulfonates, and the like can be mentioned. As perfluoroalkyl carboxylic acid compounds, for example, perfluoroalkyl carboxylic acids, perfluoroalkyl carboxylates, and the like can be mentioned. As perfluoroalkyl phosphate ester compounds, for example, perfluoroalkyl phosphate esters, perfluoroalkyl phosphate ester salts, and the like can be mentioned. As perfluoroalkyl alkylene oxide adducts, for example, perfluoroalkyl ethylene oxide adducts and the like can be mentioned. As polyoxyalkylene ether polymer compounds having a perfluoroalkyl ether group in the side chain, a sulfate ester salt of a polyoxyalkylene ether polymer having a perfluoroalkyl ether group in the side chain, a salt of a polyoxyalkylene ether polymer having a perfluoroalkyl ether group in the side chain, and the like can be mentioned. As counter ions of salts in these fluorosurfactants, Li, Na, K, NH₄, NH₃CH₂CH₂OH, NH₂(CH₂CH₂OH)₂, NH(CH₂CH₂OH)₃, and the like can be mentioned.

Among them, a polyoxyalkylene ether polymer compound having a perfluoroalkyl ether group in the side chain has particularly low foam ability and thus is more preferable, and fluorosurfactants represented by the following general formulas (3A) and (3B) are particularly preferable.

CF₃CF₂(CF₂CF₂)ₛ-CH₂CH₂O(CH₂CH₂O)ₜH ... (3A)

In a compound represented by general formula (3A), in order to impart water solubility, s is preferably an integer of 0 or more and 10 or less, and t is preferably an integer of 0 or more and 40 or less.

CᵣF₂ᵣ₊₁-CH₂CH(OH)CH₂-O-(CH₂CH₂O)_{c}-Z ... (3B)

In a compound represented by general formula (3B), Z is H, C_{d}F_{2d+1} wherein d is an integer of 1 or more and 6 or less, CH₂CH(OH)CH₂-CₑF₂ₑ₊₁ wherein e is an integer of 4 or more and 6 or less, or C_{f}H_{2f+1} wherein f is an integer of 1 or more and 19 or less. In addition, r is an integer of 1 or more and 6 or less, and c is an integer of 4 or more and 14 or less.

As fluorosurfactants, commercially available products can be used. As commercially available products, for example, Surflon S-111, S-112, S-113, S-121, S-131, S-132, S-141, and S-145 (all manufactured by Asahi Glass Co., Ltd.); Fluorad FC-93, FC-95, FC-98, FC-129, FC-135, FC-170C, FC-430, and FC-431 (all manufactured by Sumitomo 3M Limited); MEGAFACE F-470, F-1405, and F-474 (all manufactured by DIC Corporation); Zonyl TBS, FSP, FSA, FSN-100, FSN, FSO-100, FSO, FS-300, and UR (all manufactured by DuPont); FT-110, FT-250, FT-251, FT-400S, FT-150, and FT-400SW (all manufactured by Neos Company Limited), PolyFox PF-136A, PF-156A, PF-151N, PF-154, and PF-159 (manufactured by Omnova), NOIGEN FN-1287 (manufactured by Daiichi Kogyo Seiyaku Co., Ltd.), Unidyne DSN-403N (manufactured by Daikin Industries, Ltd.), LE-604, LE-605, LE-606, and LE-607 (Kyoeisha Chemical Co., Ltd.), and the like can be mentioned.

As amphoteric surfactants, for example, lauryl aminopropionates, lauryl dimethyl betaine, stearyl dimethyl betaine, lauryl dihydroxyethyl betaine, and the like can be mentioned.

As nonionic surfactants, for example, polyoxyethylene alkylphenyl ethers, polyoxyethylene alkylesters, polyoxyethylene alkylamines, polyoxyethylene alkylamides, polyoxyethylene propylene block polymers, sorbitan fatty acid esters, polyoxyethylene sorbitan fatty acid esters, acetylene alcohol derivatives, acetylene glycol derivatives, and the like can be mentioned.

As anionic surfactants, for example, polyoxyethylene alkyl ether acetates, dodecylbenzene sulfonates, laurates, salts of polyoxyethylene alkyl ether sulfates, and the like can be mentioned.

One of them may be used alone, and it is also possible to use two or more kinds together.

As described above, silicone-based surfactants can be suitably selected according to the purpose without any particular restrictions. However, a polyether-modified silicone-based surfactant having a polyoxyethylene group or a polyoxyethylene polyoxypropylene group as a modifying group exhibits excellent properties as a water-based surfactant and thus can be mentioned as a particularly preferred example.

Such surfactants may be suitably synthesized and used, and commercially available products may also be used. Commercially available products are obtainable, for example, from BYK-Chemie, Shin-Etsu Chemical Co., Ltd., Dow Corning Toray Silicone Co., Ltd., Nippon Emulsion Co., Ltd., Kyoeisha Chemical Co., Ltd., and the like.

Polyether-modified silicone-based surfactants can be suitably selected according to the purpose without any particular restrictions. For example, those represented by the following general formula (2) having a polyalkylene oxide structure introduced into the Si-moiety side chain of dimethylpolysiloxane, etc., can be mentioned.

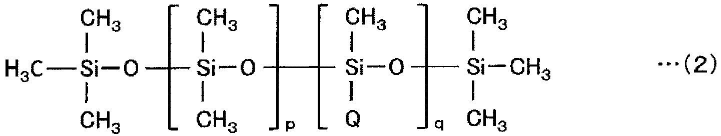

Q = -R(C₂H₄O)ₐ(C₃H₆O)_{b}R'

(In formula (2), p, q, a, and b each represent an integer. R and R' each represent a hydrocarbon group.)

As polyether-modified silicone-based surfactants, commercially available products can be used. As commercially available products, for example, KF-618, KF-642, and KF-643 (Shin-Etsu Chemical Co., Ltd.), SAG001, SAG002, SAG003, SAG005, SAG503, and SAG008 (Nissin Chemical Industry Co., Ltd.), EMALEX-SS-5602 and SS-1906EX (Nihon Emulsion Co., Ltd.), FZ-2105, FZ-2118, FZ-2154, FZ-2161, FZ-2162, FZ-2163, and FZ-2164 (Dow Corning Toray Silicone Co., Ltd.), BYK-33 and BYK-387 (BYK-Chemie), TSF4440, TSF4452, and TSF4453 (Toshiba Silicon Corporation), and the like can be mentioned.

### [Sensitizer]

The ink of the present invention may contain a sensitizer. When a sensitizer is present in the ink together with a polymerization initiator, the sensitizer in the system absorbs active energy rays and enters an excited state, and, upon contact with the polymerization initiator, accelerates the decomposition of the polymerization initiator, allowing for a more sensitive curing reaction.

Like the polymerization initiator, the sensitizer may be fat-soluble or water-soluble. A fat-soluble sensitizer can be encapsulated in particles of the UV-curable oligomer.

As sensitizers, cyclic amine-based compounds such as aliphatic amines, amines having an aromatic group, and piperidine, thioxanthone compounds, alkoxyanthracene compounds, urea-based compounds such as o-tolylthiourea, sulfur compounds such as sodium diethylthiophosphate and soluble salts of aromatic sulfinic acids; nitrile compounds such as N,N'-disubstituted-p-aminobenzonitrile, phosphorus compounds such as tri-n-butylphosphine and sodium diethyldithiophosphate, nitrogen compounds such as Michler's ketone, N-nitrosohydroxylamine derivatives, oxazolidine compounds, tetrahydro-1,3-oxazine compounds, formaldehyde, and condensation products of acetaldehyde and diamine, and the like can be used.

One of these sensitizers may be used alone, and it is also possible to use two or more kinds together.

### [Additional Oligomer, Resin, Monomer]

In addition to the above components, the ink of the present invention can contain oligomer components other than the UV-curable oligomer, optional resin components, and optional monomer components (these are collectively referred to as "additional resin components") as necessary. Additional resin components may be encapsulated in particles of the UV-curable oligomer, dissolved in the water-based medium, or in the state of being dispersed alone or complexed with other components in the ink.

### [Additional Additive]

In addition to the above components, the ink of the present invention can contain additional additives as necessary.

As additional additives, for example, known additives such as anti-fading agents, emulsion stabilizers, penetration accelerators, UV absorbers, preservatives, anti-mold agents, rust preventives, pH adjusters, viscosity adjusters, dispersants, dispersion stabilizers, defoaming agents, solid wetting agents, and chelating agents can be mentioned. These various additives may be directly added after the preparation of the ink, or may also be added during the preparation of the ink.

For additional additives, the description in JP 2010-65205 A, paragraphs 0088 to 0096, and the description in JP 2010-70669 A, paragraphs 0083 to 0090, can be suitably referenced.

### [Content of Each Component]

The content of water in the ink of the present invention can be suitably selected according to the purpose without any particular restrictions, but is, from the viewpoint of the dryness and ejection reliability of the ink, usually 10 mass% or more, preferably 20 mass% or more, and usually 90 mass% or less, preferably 80 mass% or less.

In addition, in the case where the ink of the present invention contains a water-soluble organic solvent, the content thereof (the total content of a water-soluble organic solvent used also as a moisturizing solvent and a water-soluble organic solvent used as a water-based medium) can be suitably selected according to the kind of water-soluble organic solvent used and the purpose without any particular restrictions, but is, from the viewpoint of dryness, ejection reliability, wettability to the substrate, and the like, usually 10 mass% or more and usually 50 mass% or less, preferably 40 mass% or less.

The ink of the present invention is, from the viewpoint of dryness and ejection reliability, adjusted such that the total solids concentration, that is, components other than the water-soluble organic solvent, which is water and/or a water-based medium, is usually 5 mass% or more, preferably 7 mass% or more, and more preferably 9 mass% or more, and usually 30 mass% or less, preferably 25 mass% or less, more preferably 20 mass% or less, and still more preferably 15 mass% or less.

In addition, in the case where a mixture of water and a water-soluble organic solvent is used as the water-based medium, the ratio between water and the water-soluble organic solvent (the total of a water-soluble organic solvent used also as a moisturizing solvent and a water-soluble organic solvent used as a water-based medium) is preferably such that, from the viewpoint of improving dryness and ejectability, water:water-soluble organic solvent is usually 1:0.05 to 1:1.5 (mass ratio), preferably 1:0.1 to 1:1.2 (mass ratio), and more preferably 1:0.15 to 1:1.1 (mass ratio).

The content of the UV-curable oligomer in the ink of the present invention is, from the viewpoint of the resulting printed coating film performance and UV curability, usually 3 mass% or more, preferably 5 mass% or more, and more preferably 7 mass% or more, while is, from the viewpoint of ejection stability, usually 20 mass% or less, preferably 15 mass% or less, and more preferably 12 mass% or less.

In addition, from the same point of view, the content of the UV-curable oligomer in the total solids of the ink of the present invention is usually 30 mass% or more, preferably 50 mass% or more, and more preferably 60 mass% or more, and usually 90 mass% or less, preferably 85 mass% or less, and more preferably 80 mass% or less.

Here, the total solids in the ink of the present invention can be rephrased as constituent components of a cured film (printed film) formed from the ink of the present invention, and the above numerical ranges can be employed in the same manner. The content of each component in the total solids is approximately equal to the content of such a component in a cured film (printed film) formed from the ink of the present invention.

Therefore, the fact that the content of the UV-curable oligomer in the total solids of the ink of the present invention is usually 30 mass% or more, preferably 50 mass% or more, and more preferably 60 mass% or more, and usually 90 mass% or less, preferably 85 mass% or less, and more preferably 80 mass% or less, can be treated in the same way as the face that the content of a component derived from the UV-curable oligomer in a cured film (printed film) formed from the ink of the present invention is usually 30 mass% or more, preferably 50 mass% or more, and more preferably 60 mass% or more, and usually 90 mass% or less, preferably 85 mass% or less, and more preferably 80 mass% or less.

The same applies to the contents of the colorant, mercapto compound, and other components below.

The content of the colorant in the ink of the present invention is, from the viewpoint of improving image density, excellent fixability, and ejection stability, usually 0.1 mass% or more, preferably 1 mass% or more, and usually 8 mass% or less, preferably 6 mass% or less.

In addition, from the same point of view, the content of the colorant in the total solids of the ink of the present invention is usually 1 mass% or more, preferably 5 mass% or more, and usually 40 mass% or less, preferably 30 mass% or less.

The content of the mercapto compound in the ink of the present invention is, from the viewpoint of alcohol resistance and scratch resistance, usually 0.01 mass% or more, preferably 0.03 mass% or more, more preferably 0.05 mass% or more, still more preferably 0.08 mass% or more, and particularly preferably 0.30 mass% or more, while is, from the viewpoint of production stability, usually 5 mass% or less, preferably 4 mass% or less, and more preferably 3 mass% or less.

In addition, from the same point of view, the content of the mercapto compound in the total solids of the ink of the present invention is usually 0.05 mass% or more, preferably 0.5 mass% or more, more preferably 1 mass% or more, and still more preferably 3 mass% or more, and usually 30 mass% or less, preferably 20 mass% or less, and more preferably 15 mass% or less.

In the case where the ink of the present invention contains a polymerization initiator, the content thereof is usually 0.05 mass% or more, preferably 0.1 mass% or more, more preferably 0.3 mass% or more, and still more preferably 0.4 mass% or more, and usually 8 mass% or less, preferably 5 mass% or less, more preferably 3 mass% or less, still more preferably 2 mass% or less, and particularly preferably 1 mass% or less. When the content of the polymerization initiator is within this range, the curing speed can be sufficiently improved, and it is also possible to prevent any polymerization initiator from remaining undissolved and avoid coloration derived from the polymerization initiator.

In addition, from the same point of view, the content of the polymerization initiator in the total solids of the ink of the present invention is usually 0.5 mass% or more, preferably 1 mass% or more, more preferably 2 mass% or more, and still more preferably 3 mass% or more, and usually 20 mass% or less, more preferably 15 mass% or less, still more preferably 10 mass% or less, and particularly preferably 8 mass% or less.

In the case where the ink of the present invention contains a surfactant, the content thereof can be suitably selected according to the purpose without any particular restrictions. However, from the viewpoint of achieving excellent wettability and ejection stability and improving image quality, the content of the surfactant in the ink is usually 0.001 mass% or more, preferably 0.01 mass% or more, and more preferably 0.03 mass% or more, and usually 5 mass% or more, preferably 3 mass% or less, and more preferably 1 mass% or less.

In addition, from the same point of view, the content of the surfactant in the total solids of the ink of the present invention is usually 0.01 mass% or more, preferably 0.1 mass% or more, and more preferably 0.2 mass% or more, and usually 10 mass% or less, preferably 5 mass% or less, and more preferably 3 mass% or less.

In the case where the ink of the present invention contains a sensitizer, the content thereof is usually 0.01 mass% or more, preferably 0.03 mass% or more, and more preferably 0.05 mass% or more, and usually 4 mass% or less, preferably 3 mass% or less, more preferably 1 mass% or less, and still more preferably 0.7 mass% or less. When the content of the sensitizer is within the above range, the effect of the sensitizer can be sufficiently obtained.

In addition, from the same point of view, the content of the sensitizer in the total solids of the ink of the present invention is usually 0.05 mass% or more, preferably 0.1 mass% or more, more preferably 0.3 mass% or more, and still more preferably 0.5 mass% or more, and usually 8 mass% or less, preferably 6 mass% or less, and more preferably 5 mass% or less.

### [UV-Curable Water-Based Composition]

The UV-curable water-based composition of the present invention (hereinafter sometimes referred to as "water-based composition of the present invention") is, in a first embodiment of the water-based composition of the present invention, characterized by including a UV-curable oligomer, at least one of a polymerization initiator, a sensitizer, and a surfactant, and a mercapto compound, in which the UV-curable oligomer has a structural unit derived from a compound represented by the following formula (1). 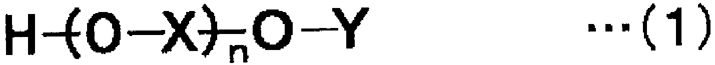 (In formula (1), X is an alkylene group, Y is a (meth)acryloyl group, an allyl group, an acyl group, or a hydrogen atom, and n is an integer of 2 or more.)

In a second embodiment of the water-based composition of the present invention, the water-based composition is characterized by including a UV-curable oligomer, at least one of a polymerization initiator, a sensitizer, and a surfactant, and a mercapto compound, in which the UV-curable oligomer has a structural unit derived from a polyisocyanate compound (A), and the compound (A) is a compound having three or more isocyanate groups in one molecule.

The UV-curable water-based composition of the present invention is a water-based composition and contains a water-based medium as with the ink of the present invention. In addition, in the water-based composition of the present invention, the UV-curable oligomer is preferably nonionic, and is preferably the above UV-curable oligomer having a structural unit derived from a polyisocyanate compound (A), a structural unit derived from the compound (B') shown below, and a structural unit derived from the compound (C') shown below, and particularly preferably a UV-curable oligomer having a structural unit derived from a polyisocyanate compound (A), a structural unit derived from a hydroxy group-containing polyfunctional (meth)acrylate (B), and a structural unit derived from a polyalkylene glycol (C).

That is, the water-based composition of the present invention described above falls under a mode of the ink of the present invention in which no colorant is present. The UV-curable oligomer, mercapto compound, water-based medium, polymerization initiator, sensitizer, surfactant, and other additives contained in the water-based composition of the present invention are the same as those described above in the section of the ink of the present invention, and their contents are also the same as the contents of the components in the ink of the present invention described above, excluding the colorant.

The use form of the water-based composition of the present invention is not particularly limited, but a use form in which the colorant described above is added to the water-based composition of the present invention to prepare the ink of the present invention is preferable. It is possible to add a colorant of one color, and two or more colors may also be added. By optionally adding colorants of two or more colors, the shade of the ink can be adjusted to the desired shade.

In addition, the water-based composition of the present invention can be used as a clear ink.

### [Method for Producing Ink]

There are no particular restrictions on the method for producing the ink of the present invention, and a method in which a dispersion of particles of a UV-curable oligomer (hereinafter, sometimes referred to as "oligomer particles") dispersed in a water-based medium (hereinafter, sometimes referred to as an "oligomer dispersion") and a dispersion of a colorant, such as a pigment, dispersed in a water-based medium (hereinafter, sometimes referred to as a "pigment dispersion") are each prepared, and the oligomer dispersion and the pigment dispersion are mixed with a polymerization initiator (water-soluble initiator) and other additives or organic solvents, can be mentioned. In addition, a method in which a colorant is added to the water-based composition of the present invention can also be mentioned. Regardless of which method is used, inks with similar performance can be produced.

In a first embodiment of the dispersion of the present invention, the dispersion is characterized by being a dispersion of a UV-curable oligomer and including 0.01 mass% or more and 10 mass% or less of a mercapto compound, in which the UV-curable oligomer has a structural unit derived from a compound represented by the following formula (1). 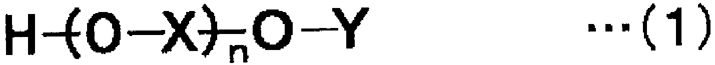 (In formula (1), X is an alkylene group, Y is a (meth)acryloyl group, an allyl group, an acyl group, or a hydrogen atom, and n is an integer of 2 or more.)

In a second embodiment of the dispersion of the present invention, the dispersion is characterized by being a dispersion of a UV-curable oligomer and including 0.01 mass% or more and 10 mass% or less of a mercapto compound, in which the UV-curable oligomer has a structural unit derived from a polyisocyanate compound (A), and the compound (A) is a compound having three or more isocyanate groups in one molecule.

Although it is preferable that during the preparation of the oligomer dispersion, a mercapto compound and a fat-soluble initiator and/or a fat-soluble sensitizer are added to a UV-curable oligomer and mixed to form an emulsion encapsulating them in oligomer particles, followed by adding and mixing a soluble initiator and/or a water-soluble sensitizer, it is also possible that after a mercapto compound is added to a UV-curable oligomer and mixed to form an emulsion, a suitable combination selected from a water-soluble initiator, a water-soluble sensitizer, a fat-soluble initiator, and a fat-soluble sensitizer is further added and mixed. Further, it is also possible that a fat-soluble initiator or a fat-soluble sensitizer is separately dissolved in an organic solvent to a concentration of about 0.1 mass% or more and 10 mass% or less and, as a solution, mixed with other components.

The content of the mercapto compound in the oligomer dispersion is preferably 0.01 mass% or more and 10 mass% or less, and more preferably 0.1 mass% or more and 8 mass% or less.

In addition, also in the case where a mercapto compound is encapsulated in oligomer particles, the content of the mercapto compound in the oligomer dispersion is preferably the same amount as above.

A mercapto compound may also be contained in the ink of the present invention by, instead of encapsulating the mercapto compound in a UV-curable oligomer as described above, adding the mercapto compound to a dispersion of the UV-curable oligomer.

In this case, the amount of mercapto compound added to a dispersion of the UV-curable oligomer may be any amount that makes the above favorable content in the ink of the present invention. For example, the mercapto compound is used in an amount of about 0.1 mass% or more and 10 mass% or less relative to the UV-curable oligomer.

### <Preparation of Oligomer Dispersion>

The oligomer dispersion can be prepared by mixing a UV-curable oligomer with a water-based medium (preferably water).

By adjusting the temperature and stirring speed at this time, the average particle size of the resulting oligomer particles can be adjusted.

From the viewpoint of handleability, the oligomer particle concentration in the oligomer dispersion thus prepared is preferably about 10 mass% or more and 30 mass% or less.

As described above, during the preparation of the oligomer dispersion, a mercapto compound alone or a mercapto compound and a fat-soluble initiator and/or a fat-soluble sensitizer can be added and mixed, thereby giving a dispersion of oligomer particles encapsulating them.

In this case, in order to prevent the generation of particles of initiators alone containing no oligomer, it is preferable that at least a UV-curable oligomer and a fat-soluble initiator are first mixed, and then mixed with a water-based medium such as water. In the case of making oligomer particles encapsulating a fat-soluble initiator, the content of the fat-soluble initiator in the oligomer particles is, from the viewpoint of production stability, preferably about 0.1 mass% or more and 8 mass% or less relative to the UV-curable oligomer.

Similarly, in order to prevent the generation of particles of a mercapto compound alone containing no oligomer, it is preferable that at least a UV-curable oligomer and a mercapto compound are first mixed, and then mixed with a water-based medium such as water. In the case of making oligomer particles encapsulating a mercapto compound, the content of the mercapto compound in the oligomer particles is, from the viewpoint of production stability, preferably about 0.1 mass% or more and 30 mass% or less relative to the UV-curable oligomer.

In the present invention, it is also possible that several kinds of oligomer dispersions encapsulating different compounds are prepared, mixed, and used. In addition, it is also possible that an oligomer dispersion of a UV-curable oligomer alone encapsulating no compound and an oligomer dispersion encapsulating all the compounds or several kinds of oligomer dispersions encapsulating different compounds are mixed and used.

### <Preparation of Pigment Dispersion>

The pigment dispersion can be prepared by adding a colorant such as a pigment to a water-based medium such as water, followed by mixing.

The concentration of the colorant, such as a pigment, in the pigment dispersion is, from the viewpoint of handleability and storage stability, usually 5 mass% or more, preferably 10 mass% or more, and usually 40 mass% or less, preferably 35 mass% or less.

Incidentally, as the pigment dispersion, it is also possible to directly use a commercially available product.

### [Method for Producing Water-Based Composition]

There are no particular restrictions on the method for producing the water-based composition of the present invention, but a method in which, as in the method for producing the ink of the present invention described above, an oligomer dispersion is prepared, and the prepared oligomer dispersion is mixed with at least one of a polymerization initiator (water-soluble initiator), a sensitizer, and a surfactant, and other additives and organic solvents used as necessary, can be mentioned.

As described above, during the preparation of the oligomer dispersion, a mercapto compound alone or a mercapto compound and a fat-soluble initiator and/or a fat-soluble sensitizer can be added and mixed, thereby encapsulating them in oligomer particles. In addition, it is also possible that a fat-soluble initiator or a fat-soluble sensitizer is separately dissolved in an organic solvent to a concentration of about 0.1 mass% or more and 10 mass% or less and, as a solution, mixed with other components.

The method for preparing an oligomer dispersion and the method for preparing a dispersion of oligomer particles encapsulating a mercapto compound alone or a mercapto compound together with a fat-soluble initiator and/or a fat-soluble sensitizer are the same as in the method for producing the ink of the present invention described above.

### [Viscosity of Ink]

The ink of the present invention is excellent in pigment dispersion stability, and thus the viscosity of the ink can be kept low. As a result, the ink ejectability is excellent even during high-speed printing. The viscosity of the ink of the present invention at 25°C is preferably 25 mPa sec or less, more preferably 20 mPa sec or less, and still more preferably 10 mPa sec or less. Incidentally, the lower limit is not particularly set, but is preferably 1 mPa sec or more, and more preferably 2 mPa sec or more.

### [Viscosity of Water-Based Composition]

The viscosity of the water-based composition of the present invention at 25°C is preferably 50 mPa sec or less, more preferably 30 mPa sec or less, and still more preferably 20 mPa sec or less. Incidentally, the lower limit is not particularly set, but is preferably 0.5 mPa sec or more, and more preferably 1 mPa sec or more.

### [Ink Storage Container]

The ink of the present invention can be stored in an ink cartridge or an ink bottle, which can eliminate the need to directly touch the ink during operations such as ink transfer and ink replacement, preventing fingers and clothes from getting dirty. In addition, it is possible to prevent foreign matters such as dust from entering the ink.

The shape, size, material, and the like of the ink storage container itself are not particularly limited as long as they are suitable for the inkjet printer to be applied and the like, for example. However, it is desirable that the material is a light-shielding material that does not transmit light, or that the container is covered with a light-shielding sheet or the like.

### [Inkjet Recording Method]

An inkjet recording method using the ink of the present invention preferably includes a step of ejecting the ink of the present invention from an ejection nozzle of an inkjet printer and attaching the ink to a recording medium, a heating step of heating the recording medium having attached thereto the ink, and an irradiation step of irradiating the ink attached to the recording medium with active energy rays. Incidentally, the step of attaching the ink of the present invention to a recording medium only needs to attach the ink to a recording medium in an atomized form (mist, spray), and is not necessarily limited to a method using an inkjet printer.

### <Recording Medium>

There are no particular restrictions on recording media to which the ink of the present invention is applied, and high-quality printed images can be formed on various substrates with excellent adhesion. Examples thereof include plastic materials such as polyethylene terephthalate (PET) and like polyesters and polyvinyl chloride (PVC), polyethylene (PE), polypropylene (PP), and like polyolefins, paper, TEXTILE (cloths and woven fabrics), leather, glass, ceramics, wood, metal, and composite materials thereof.

### <Heating Step>

In the heating step, it is preferable that a recording medium having attached thereto the ink of the present invention is heated to 40°C or more. The heating temperature is more preferably 45°C or more, and more preferably 50°C or more. As a result of the above heating, volatile components in the ink, such as water, can be dried, and it tends to be possible to further enhance curability. The upper limit of the heating temperature is not particularly set. However, because the presence of a heating means generally dries the ink on the nozzle surface, and this tends to cause ejection failure, the temperature is preferably 120°C or less, and more preferably 100°C or less. Here, the heating temperature is the surface temperature of the recording surface of the recording medium.

Examples of heating means include, but are not particularly limited to, ceramic heaters, halogen heaters, quartz tube heaters, and the like.

The timing of heating may be before attaching the ink of the present invention to a recording medium, during the attachment, or after the attachment, for example. However, it is more preferable to continue heating through all the steps before, during, and after the attachment.

### <Irradiation Step>

In the irradiation step, the polymerization reaction of the UV-curable oligomer is initiated by irradiation with active energy rays. In addition, the polymerization initiator contained in the ink is decomposed by irradiation with active energy rays to generate radical, acid, or base initiating species, etc., and the polymerization reaction of the UV-curable oligomer is accelerated by the function of the initiating species. At this time, when a sensitizer is present in the ink together with the polymerization initiator, the sensitizer in the system absorbs active energy rays and enters an excited state, and, upon contact with the polymerization initiator, accelerates the decomposition of the polymerization initiator, allowing for a more sensitive curing reaction.

As light sources (active energy ray sources), mercury lamps, metal halide lamps, gas/solid lasers, and the like are widely known. Meanwhile, there is currently a strong demand for mercury-free products from the viewpoint of environmental protection, and replacement with GaN-based semiconductor UV light-emitting devices is extremely useful both industrially and environmentally. Further, UV light-emitting diodes (UV-LEDs) and UV laser diodes (UV-LDs) are small size, long life, high efficiency, and low cost and thus expected to serve as light sources for UV-curable inkjets. Among them, UV-LEDs are preferable.

The emission peak wavelength of the active energy ray source for irradiation is preferably within a range of 350 to 450 nm, and the irradiation energy is preferably 20 J/cm² or less, for example, 0.5 to 10 J/cm².

Incidentally, there may be one or more emission peak wavelengths within the above wavelength range.

In addition, the irradiation step is not limited to an intentional step as described above, and may also be sunlight irradiation by outdoor exposure, for example. In addition, in the case where the UV-curable oligomer of the present invention has high reactivity (curability), it is possible to perform only the heating step without the irradiation step. That is, the ink of the present invention only needs to have UV curability, and is not limited to being used in a printing method having an irradiation step.

### [Application]

The ink of the present invention is water-based and thus is excellent in environment safety. The ink is also excellent in coating film performance, especially alcohol resistance and scratch resistance, while meeting the required characteristics as a printing ink, for example, an inkjet printing ink, in a well-balanced manner. Therefore, printed images with high image quality performance and high coating film performance can be printed with high productivity on various recording media. Because of such features, various applications are possible, including posters, road signs, signboards, billboards, various display boards for outdoor and indoor use, building materials (surface materials for exterior, interior, walls, floors, ceilings, windows, etc.), the exterior of vehicles and the like (automobiles, railways, aircraft, etc.), surface materials for furniture and OA equipment, paper printouts, and the like.

### Examples

Hereinafter, some examples of the present invention will be described. However, the present invention is not limited to these examples.

First, examples and comparative examples of the first embodiment of the present invention will be described.

### [Preparation of UV-Curable Oligomer 1]

0.4 mol of a trimer of hexamethylene diisocyanate, 0.8 mol of dipentaerythritol pentaacrylate, and 0.4 mol of polyethylene glycol monoallyl ether (n in the above general formula (1) = 30 to 40) were reacted to produce a nonionic UV-curable oligomer 1.

### [Preparation of Fat-Soluble Initiator Solution]

1 part by mass of GENOPOL TX-2 manufactured by RAHN as a fat-soluble initiator was added to 100 parts by mass of diethylene glycol monoisobutyl ether as a water-soluble organic solvent, and completely dissolved with stirring at 40°C, thereby giving a fat-soluble initiator solution.

### [Mercapto Compound]

The following compounds were used as mercapto compounds.
(1) Secondary tetrafunctional thiol: Pentaerythritol tetrakis(3-mercaptobutyrate), Karenz MTO manufactured by Showa Denko K.K., PE-1
(2) Primary tetrafunctional thiol: Pentaerythritol tetra(3-mercaptopropionate), jER Cure^{®} manufactured by Mitsubishi Chemical Corporation, ΓaX40

### [Example 1]

The UV-curable oligomer 1 was kept at 60°C, and the secondary tetrafunctional thiol of (1) was added to have the composition ratio shown in Table 1 below. With stirring and mixing, deionized water pre-warmed to 60°C was added dropwise to give an aqueous dispersion. The average particle size (D₅₀) of the UV-curable oligomer particles in the aqueous dispersion was measured using a particle size distribution meter MICROTRAC UPA (MODEL: 9340-UPA, manufactured by Nikkiso Co., Ltd.) and found to be 39 nm.

Deionized water, 1,2-butanediol as a moisturizing solvent, diethylene glycol monoisobutyl ether as a water-soluble organic solvent, a fat-soluble initiator, a water-soluble initiator, a water-soluble sensitizer, NOIGEN FN1287 manufactured by Daiichi Kogyo Seiyaku Co., Ltd., as a surfactant [1], LE-605 manufactured by Kyoeisha Chemical Co., Ltd., as a surfactant [2], and EMACOL SF CYAN AE2034F manufactured by Sanyo Color Works, Ltd., as a pigment dispersion were added to the aqueous dispersion to have the composition ratio shown in Table 1 below and mixed, thereby giving an ink composition liquid 1.

### [Preparation of Fat-Soluble Initiator-Encapsulating UV-Curable Oligomer Aqueous Dispersion 1]

The UV-curable oligomer 1 and GENOPOL TX-2 manufactured by RAHN as a fat-soluble initiator at the composition ratio shown in Table 1 were kept at 60°C, and the secondary tetrafunctional thiol of (1) was added. With stirring and mixing, deionized water pre-warmed to 60°C was added dropwise to give a fat-soluble initiator-encapsulating UV-curable oligomer aqueous dispersion 1. The average particle size (D₅₀) of UV-curable oligomer particles in this fat-soluble initiator-encapsulating UV-curable oligomer aqueous dispersion 1 was measured in the same manner as in Example 1 and found to be 39 nm.

### [Example 2]

Deionized water, 1,2-butanediol as a moisturizing solvent, a water-soluble initiator, a water-soluble sensitizer, NOIGEN FN1287 manufactured by Daiichi Kogyo Seiyaku Co., Ltd., as a surfactant [1], LE-605 manufactured by Kyoeisha Chemical Co., Ltd., as a surfactant [2], and EMACOL SF CYAN AE2034F manufactured by Sanyo Color Works, Ltd., as a pigment dispersion were added to the fat-soluble initiator-encapsulating UV-curable oligomer aqueous dispersion 1 to have the composition ratio shown in Table 1 below and mixed, thereby giving an ink composition liquid 2.

### [Example 3]

An ink composition liquid 3 was obtained in the same manner as in Example 2, except that the secondary tetrafunctional thiol of (1) was changed to the primary tetrafunctional thiol of (2).

### [Example 4]

An ink composition liquid 4 was obtained in the same manner as in Example 2, except that the blending proportion of the secondary tetrafunctional thiol described above in (1) was changed as shown in Table 1 below.

### [Comparative Example 1]

An ink composition liquid 5 was obtained in the same manner as in Example 1, except that the secondary tetrafunctional thiol of (1) was not added.

### [Comparative Example 2]

An ink composition liquid 6 was obtained in the same manner as in Example 2, except that the secondary tetrafunctional thiol of (1) was not added.

### [Example 5]

Equal amounts of the ink composition liquid 2 and the ink composition liquid 6 were mixed to give an ink composition liquid 7.

**[Table 1]**

| | Ink Composition Ratio (m ass% ) | | | | | | | | | | | | |
|---|---|---|---|---|---|---|---|---|---|---|---|---|---|
| | | UV-Curable 0 ligomer Aqueous Dispersion | | | | | Moisturizing Solvent | Water-Soluble Organic Solvent | Fat-Soluble Initiator | Water-Soluble Initiator | Water-Soluble Sensitizer | Surfactant [1]/[2] | Water |
| | | Pigment UV-Curable 0 ligomer | | Mercapto Compound | | Fat-Soluble Initiator | | | | | | | |
| Example 1 | 2 | UV-curable oligomer 1 | 10 | Secondary tetrafunctionalthiol | 1 | - | 10 | 10 | 0.1 | 0.5 | 0.1 | 0.1/0.05 | Remainder |
| Example 2 | 2 | UV-curable oligomer 1 | 10 | Secondary tetrafunctionalthio 1 | 1 | 0.1 | 20 | - | - | 0.5 | 0.1 | 0.1/0.05 | Remainder |
| Example 3 | 2 | UV-curable oligomer 1 | 10 | Prinmary tetrafunctionalthio 1 | 1 | 0.1 | 20 | - | - | 0.5 | 0.1 | 0.1/0.05 | Remainder |
| Example 4 | 2 | UV-curable oligomer 1 | 10 | Secondary tetrafunctionalthio 1 | 2 | 0.1 | 20 | - | - | 0.5 | 0.1 | 0.1/0.05 | Remainder |
| Example 5 | 2 | UV-curable oligomer 1 | 10 | Secondary tetrafunctionalthio 1 | 0.5 | 0.1 | 20 | - | - | 0.5 | 0.1 | 0.1/0.05 | Remainder |
| Comparative Example 1 | 2 | UV-curable oligomer 1 | 10 | - | - | - | 10 | 10 | 0.1 | 0.5 | 0.1 | 0.1/0.05 | Remainder |
| Comparative Example 2 | 2 | UV-curable oligomer 1 | 10 | - | - | 0.1 | 20 | - | - | 0.5 | 0.1 | 0.1/0.05 | Remainder |

### [Evaluation of Ink Composition Liquid]

The ink composition liquids obtained in Examples 1 to 5 and Comparative Examples 1 to 2 were evaluated as follows. The results are shown in Table 2.

### <Evaluation of Alcohol Resistance and Scratch Resistance of Cured Film>

A cured film was formed by the following method (1), and alcohol resistance was evaluated by the method (2), while scratch resistance was evaluated by the method (3).

### (1) LED Curing

On a PVC film, about 50 cm² of the ink composition liquid prepared above was applied to a film thickness of 15 µm using a bar coater, heated at 80°C for 10 minutes, and then irradiated with UV rays at an irradiation energy of 7 J/cm² using an LED with a peak wavelength of 385 nm, thereby forming a cured film.

### (2) Evaluation of Alcohol Resistance of Cured Film

Using the cured film obtained above, alcohol resistance was evaluated.

In the evaluation, absorbent cotton was immersed in absolute ethanol, then the cured film surface was rubbed with no load or with a load of 200 g, and the presence/absence of color transfer on the absorbent cotton was visually observed and evaluated according to the following evaluation criteria. The results are shown in Table 2. Incidentally, in this evaluation test, "C" or higher was rated as acceptable.
A: No color transfer on absorbent cotton in both tests.
B: No color transfer on absorbent cotton with no load, but there was slight color transfer on absorbent cotton with 200 g load.
C: No color transfer on absorbent cotton with no load, but there was color transfer on absorbent cotton with 200 g load.
D: No color transfer on absorbent cotton with no load, but the coating film peeled off with 200 g load, and the substrate was exposed.
E: There was color transfer on absorbent cotton or exposure of the coating film with no load, posing a practical problem.

### (3) Evaluation of Scratch Resistance of Cured Film

Using the cured film obtained above, scratch resistance was evaluated.

Evaluation was performed using a friction wear tester TriboGear HEIDON-14DR (manufactured by Shinto Scientific Co., Ltd.). A wrapping film sheet with a grit size of #1000 (manufactured by Trusco Nakayama Corporation) was set on a circular terminal with a contact surface 27 mm in diameter, and the cured film surface was subjected to 10 double rubs with a load of 400 g over a test distance of 50 mm within 10 seconds. Peeling of the cured film at this time was binarized using image analysis software, and the proportion (%) of the peeled portion in the area of the cured film was determined. The results are shown in Table 2. In this evaluation test, 2.00% or less was rated was acceptable.

**[Table 2]**

| | Alcohol Resistance | Scratch Resistance (% ) |
|---|---|---|
| | | PVC |
| Example 1 | A | 1.28 |
| Example 2 | A | 0.93 |
| Example 3 | A | 0.24 |
| Example 4 | B | 0.00 |
| Example 5 | B | 0.09 |
| Comparative Example 1 | C | 11.70 |
| Comparative Example 2 | C | 2.18 |

From Tables 1 and 2, it turned out that the ink of the present invention containing a mercapto compound were excellent in alcohol resistance and scratch resistance and capable of forming a printed image with excellent coating film performance.

In contrast, it turned out that the inks of Comparative Example 1 and Comparative Example 2 containing no mercapto compound were inferior in alcohol resistance and scratch resistance.

### [Preparation of UV-Curable Oligomer 2]

0.75 mol of isophorone diisocyanate, 0.90 mol of dipentaerythritol pentaacrylate, and 0.52 mol of polyethylene glycol (n in the above general formula (1) =15 to 25) were reacted to produce a nonionic UV-curable oligomer 2.

### [Preparation of UV-Curable Oligomer 3]

0.87 mol of isophorone diisocyanate, 1.0 mol of dipentaerythritol pentaacrylate, 0.30 mol of polyethylene glycol (n in the above general formula (1) = 10 to 20), 0.13 mol of 2,2-bis(hydroxymethyl)propionic acid, and 0.12 mol of 2,2-bis(hydroxymethyl)butyric acid were reacted to produce an anionic UV-curable oligomer 3 containing a carboxy group.

### [Preparation of Fat-Soluble Initiator-Encapsulating UV-Curable Oligomer Aqueous Dispersion 2]

A fat-soluble initiator-encapsulating UV-curable oligomer aqueous dispersion 2 was obtained in the same manner as for the fat-soluble initiator-encapsulating UV-curable oligomer aqueous dispersion 1, except that the UV-curable oligomer 1 was changed to the UV-curable oligomer 2.

The average particle size (D50) of the UV-curable oligomer particles in the aqueous dispersion was measured using a particle size distribution meter (Nanotrac Wave II EX-150, manufactured by MicrotracBEL Corp.) and found to be 30 nm.

### [Preparation of Fat-Soluble Initiator-Encapsulating UV-Curable Oligomer Aqueous Dispersion 3]

A fat-soluble initiator-encapsulating UV-curable oligomer aqueous dispersion 3 was obtained in the same manner as for the fat-soluble initiator-encapsulating UV-curable oligomer aqueous dispersion 1, except that the UV-curable oligomer 1 was changed to UV- curable oligomer 3, and 1.25 molar equivalents of sodium hydroxide was added to 1 molar equivalent of carboxy groups contained in the UV-curable oligomer 3 to cause neutralization.

The average particle size (D50) of the UV-curable oligomer particles in the aqueous dispersion was measured using a particle size distribution meter (Nanotrac Wave II EX-150, manufactured by MicrotracBEL Corp.) and found to be 160 nm.

### [Example 6]

Deionized water, the fat-soluble initiator-encapsulating UV-curable oligomer aqueous dispersion 2, diethylene glycol ethyl methyl ether as a moisturizing solvent, propylene glycol as a water-soluble organic solvent, a water-soluble initiator, a water-soluble sensitizer, BYK-347 manufactured by BYK-Chemie Japan as a surfactant, and EMACOL SF CYAN AE2034F manufactured by Sanyo Color Works, Ltd., as a pigment dispersion were added to the composition ratio in Table 3 and mixed, thereby giving an ink composition liquid 8.

### [Example 7]

An ink composition liquid 9 was obtained in the same manner as in Example 6, except that the fat-soluble initiator-encapsulating UV-curable oligomer aqueous dispersion 2 was changed to the fat-soluble initiator-encapsulating UV-curable oligomer aqueous dispersion 3.

### [Comparative Example 3]

An ink composition liquid 10 was obtained in the same manner as in Example 6, except that the secondary tetrafunctional thiol of (1) was not added.

### [Comparative Example 4]

An ink composition liquid 11 was obtained in the same manner as in Example 7, except that the secondary tetrafunctional thiol of (1) was not added.

**[Table 3]**

| | Ink Composition Ratio (m ass% ) | | | | | | | | | | | |
|---|---|---|---|---|---|---|---|---|---|---|---|---|
| | Pigment | UV-Curable 0 ligomer Aqueous Dispersion | | | | | Moistu rizing Solvent | Water-Soluble Organic Solvent | Water-Soluble Initiator | Water-Soluble Sensitizer | Surfactant | Water |
| | | UV-Curable 0 ligom er | | Mercapto Compound | | Fat-Soluble Initiator | | | | | | |
| Example 6 | 2 | UV-curable oligomer 2 | 10 | Secondary tetrafunctionalthiol | 1 | 0.1 | 10 | 10 | 0.5 | 0.1 | 0.6 | Remainder |
| Example 7 | 2 | UV-curable oligomer 3 | 10 | Secondary tetrafunctionalthiol | 1 | 0.1 | 10 | 10 | 0.5 | 0.1 | 0.6 | Remainder |
| Comparative Example 3 | 2 | UV-curable oligomer 2 | 10 | - | - | 0.1 | 10 | 10 | 0.5 | 0.1 | 0.6 | Remainder |
| Comparative Example 4 | 2 | UV-curable oligomer 3 | 10 | - | - | 0.1 | 10 | 10 | 0.5 | 0.1 | 0.6 | Remainder |

### [Evaluation of Ink Composition Liquid]

The ink composition liquids obtained in Examples 6 to 7 and Comparative Examples 3 to 4 were evaluated as follows. The results are shown in Table 4.

### <Evaluation of Alcohol Resistance and Scratch Resistance of Cured Film>

A cured film was formed by the following method (1), and scratch resistance was evaluated by the method (2), while alcohol resistance was evaluated by the method (3).

### (1) LED Curing

A cured film was formed on a PVC film and also on a polymethyl methacrylate (PMMA) film by the method described above.

### (2) Evaluation of Scratch Resistance of Cured Film

Using the cured film on a PVC film and the cured film on a PMMA film obtained above, scratch resistance was evaluated.

Evaluation was performed using a friction wear tester TriboGear HEIDON-14DR (manufactured by Shinto Scientific Co., Ltd.). Bonstar Steel Wool No. 0000 manufactured by Nippon Steel Wool Co., Ltd. was set on a circular terminal with a contact surface 27 mm in diameter, and the cured film surface was subjected to 10 double rubs with a load of 400 g over a test distance of 50 mm within 10 seconds. Peeling of the cured film at this time was binarized using image analysis software, and the proportion (%) of the peeled portion in the area of the cured film was determined. The results are shown in Table 4.

The wear conditions in this test using Bonstar Steel Wool are more severe than in the above test using a wrapping film sheet. Accordingly, in this evaluation test, 10.00% or less was rated as acceptable for cured films on a PVC film, and 0.25% or less was rated as acceptable for cured films on a PMMA film. Incidentally, because a PMMA film is believed to be a material to which an ink adheres more easily than a PVC film, the acceptance criteria were established separately for cured films on a PVC film and cured films on a PMMA film.

### (3) Evaluation of Alcohol Resistance of Cured Film

Using the cured film on a PVC film obtained above, alcohol resistance was evaluated.

In the evaluation, absorbent cotton was immersed in absolute ethanol, then the cured film surface was rubbed with no load or with a load of 200 g, and the presence/absence of color transfer on the absorbent cotton was visually observed and evaluated according to the following evaluation criteria. The results are shown in Table 4. Incidentally, in this evaluation test, "C" or higher was rated as acceptable.
A: No color transfer on absorbent cotton in both tests.
B: No color transfer on absorbent cotton with no load, but there was slight color transfer on absorbent cotton with 200 g load.
C: No color transfer on absorbent cotton with no load, but there was color transfer on absorbent cotton with 200 g load.
D: No color transfer on absorbent cotton with no load, but the coating film peeled off with 200 g load, and the substrate was exposed.
E: There was color transfer on absorbent cotton or exposure of the coating film with no load, posing a practical problem.

**[Table 4]**

| | Alcohol Resistance | Scratch Resistance (% ) | |
|---|---|---|---|
| | | PVC | PMMA |
| Example 6 | C | 5.45 | 0.01 |
| Example 7 | C | 8.83 | 0.14 |
| Comparative Example 3 | C | 24.03 | 0.3 |
| Comparative Example 4 | C | 12.89 | 2.79 |

From Table 4, it turned out that the ink of the present invention containing a mercapto compound was, regardless of the structure of the UV-curable oligomer, excellent in alcohol resistance and scratch resistance and capable of forming a printed image with excellent coating film performance.

Further, it also turned out that both when applied to a PVC film and when applied to a PMMA film, the ink of the present invention was excellent in scratch resistance, and the substrate versatility was also high.

In contrast, it turned out that the inks of Comparative Examples 3 and 4 containing no mercapto compound were inferior in scratch resistance and alcohol resistance, and further also inferior in substrate versatility.

Next, examples and comparative examples of the second embodiment of the present invention will be described.

### [Examples 2-1 to 2-5 and Comparative Examples 2-1 and 2-2]

Ink composition liquids were obtained in the same manner as in the above Examples 1 to 5 and Comparative Examples 1 and 2.

**[Table 5]**

| | Ink Composition Ratio (m ass% ) | | | | | | | | | | | | |
|---|---|---|---|---|---|---|---|---|---|---|---|---|---|
| | Pigment | U V-Curable 0 ligom er Aqueous D ispersion | | | | | Moistu rizing Solvent | Water-Soluble Organic Solvent | Fat-So luble Initiator | Water-Soluble Initiator | Water-Soluble Sensitizer | Surfactant [1]/[2] | Water |
| | | UV-Curable 0 ligomer | | Mercapto Compound | | Fat-Soluble Initiator | | | | | | | |
| Example 2-1 | 2 | UV-curable oligomer 1 | 10 | Secondary tetrafunctionalthiol | 1 | - | 10 | 10 | 0.1 | 0.5 | 0.1 | 0.1/0.05 | Remainder |
| Example 2-2 | 2 | UV-curable oligomer 1 | 10 | Secondary tetrafunctionalthiol | 1 | 0.1 | 20 | - | - | 0.5 | 0.1 | 0.1/0.05 | Remainder |
| Example 2-3 | 2 | UV-curable oligomer 1 | 10 | Primary tetrafunctionalthiol | 1 | 0.1 | 20 | - | - | 0.5 | 0.1 | 0.1/0.05 | Remainder |
| Example 2-4 | 2 | UV-curable oligomer 1 | 10 | Secondary tetrafunctionalthiol | 2 | 0.1 | 20 | - | - | 0.5 | 0.1 | 0.1/0.05 | Remainder |
| Example 2-5 | 2 | UV-curable oligomer 1 | 10 | Secondary tetrafunctionalthiol | 0.5 | 0.1 | 20 | - | - | 0.5 | 0.1 | 0.1/0.05 | Remainder |
| Com parative Example 2-1 | 2 | UV-curable oligomer 1 | 10 | - | - | - | 10 | 10 | 0.1 | 0.5 | 0.1 | 0.1/0.05 | Remainder |
| Com parative Example 2-2 | 2 | UV-curable o ligom e r 1 | 10 | - | - | 0.1 | 20 | - | - | 0.5 | 0.1 | 0.1/0.05 | Remainder |

### [Evaluation of Ink Composition Liquid]

With respect to the ink composition liquids obtained in Examples 2-1 to 2-5 and Comparative Examples 2-1 and 2-2, the alcohol resistance and scratch resistance of a cured film were evaluated by the same methods as in Examples 1 to 5 and Comparative Examples 1 and 2 above. The results are shown in Table 6.

**[Table 6]**

| | Alcohol Resistance | Scratch Resistance (% ) |
|---|---|---|
| | | PVC |
| Example 2-1 | A | 1.28 |
| Example 2-2 | A | 0.93 |
| Example 2-3 | A | 0.24 |
| Example 2-4 | B | 0.00 |
| Example 2-5 | B | 0.09 |
| Comparative Example 2-1 | C | 11.70 |
| Comparative Example 2-2 | C | 2.18 |

From Table 6, it turned out that the ink of the present invention containing a mercapto compound were excellent in alcohol resistance and scratch resistance and capable of forming a printed image with excellent coating film performance.

In contrast, it turned out that the inks of Comparative Example 2-1 and Comparative Example 2-2 containing no mercapto compound were inferior in alcohol resistance and scratch resistance.

## Claims

1. A UV-curable water-based ink comprising at least a UV-curable oligomer, a colorant, and a mercapto compound, wherein
the UV-curable oligomer has a structural unit derived from a compound represented by the following formula (1): 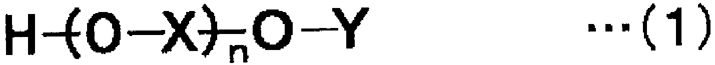 wherein X is an alkylene group, Y is a (meth)acryloyl group, an allyl group, an acyl group, or a hydrogen atom, and n is an integer of 2 or more.

2. The UV-curable water-based ink according to claim 1, wherein the UV-curable oligomer further has a structural unit derived from a compound containing four or more polymerizable unsaturated bonds.

3. The UV-curable water-based ink according to claim 1, wherein
the UV-curable oligomer further has a structural unit derived from a polyisocyanate compound (A), and
the compound (A) is a compound having two or more isocyanate groups in one molecule.

4. A UV-curable water-based ink comprising at least a UV-curable oligomer, a colorant, and a mercapto compound, wherein
the UV-curable oligomer has a structural unit derived from a polyisocyanate compound (A), and
the compound (A) is a compound having three or more isocyanate groups in one molecule.

5. The UV-curable water-based ink according to any one of claims 1 to 4, wherein the mercapto compound is a secondary thiol.

6. The UV-curable water-based ink according to any one of claims 1 to 5, wherein the mercapto compound is a polyfunctional thiol.

7. The UV-curable water-based ink according to any one of claims 1 to 6, wherein the content of the mercapto compound is 0.01 mass% or more and 5 mass% or less.

8. The UV-curable water-based ink according to any one of claims 1 to 7, further comprising at least one of a polymerization initiator, a sensitizer, and a surfactant.

9. The UV-curable water-based ink according to any one of claims 1 to 8, wherein the mercapto compound is encapsulated in the UV-curable oligomer.

10. The UV-curable water-based ink according to any one of claims 1 to 9, comprising a polymerization initiator and/or a sensitizer, wherein at least one of the polymerization initiator and/or sensitizer is encapsulated in the UV-curable oligomer.

11. The UV-curable water-based ink according to any one of claims 1 to 10, wherein the UV-curable oligomer is nonionic.

12. The UV-curable water-based ink according to any one of claims 1 to 11, wherein the UV-curable oligomer is present as particles.

13. The UV-curable water-based ink according to any one of claims 1 to 12, wherein the UV-curable oligomer has an average particle size of 10 nm or more and 200 nm or less.

14. A printed article having a cured product formed from the UV-curable water-based ink according to any one of claims 1 to 13 on a recording medium.

15. A dispersion being a dispersion of a UV-curable oligomer and comprising 0.01 mass% or more and 10 mass% or less of a mercapto compound, wherein
the UV-curable oligomer has a structural unit derived from a compound represented by the following formula (1): 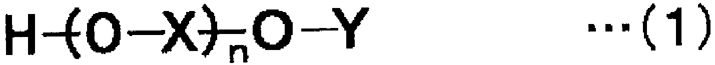 wherein X is an alkylene group, Y is a (meth)acryloyl group, an allyl group, an acyl group, or a hydrogen atom, and n is an integer of 2 or more.

16. A dispersion being a dispersion of a UV-curable oligomer and comprising 0.01 mass% or more and 10 mass% or less of a mercapto compound, wherein
the UV-curable oligomer has a structural unit derived from a polyisocyanate compound (A), and
the compound (A) is a compound having three or more isocyanate groups in one molecule.

17. The dispersion according to claim 15 or 16, wherein the mercapto compound is a secondary thiol.

18. The dispersion according to any one of claims 15 to 17, wherein the mercapto compound is a polyfunctional thiol.

19. A UV-curable water-based composition comprising a UV-curable oligomer, at least one of a polymerization initiator, a sensitizer, and a surfactant, and a mercapto compound, wherein
the UV-curable oligomer has a structural unit derived from a compound represented by the following formula (1): 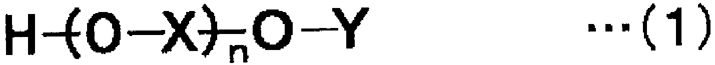 wherein X is an alkylene group, Y is a (meth)acryloyl group, an allyl group, an acyl group, or a hydrogen atom, and n is an integer of 2 or more.

20. A UV-curable water-based composition comprising a UV-curable oligomer, at least one of a polymerization initiator, a sensitizer, and a surfactant, and a mercapto compound, wherein
the UV-curable oligomer has a structural unit derived from a polyisocyanate compound (A), and
the compound (A) is a compound having three or more isocyanate groups in one molecule.

21. The UV-curable water-based composition according to claim 19, wherein the UV-curable oligomer further has a structural unit derived from a compound containing four or more polymerizable unsaturated bonds.

22. The UV-curable water-based composition according to claim 19, wherein
the UV-curable oligomer further has a structural unit derived from a polyisocyanate compound (A), and
the compound (A) is a compound having two or more isocyanate groups in one molecule.

23. The UV-curable water-based composition according to any one of claims 19 to 22, wherein the mercapto compound is a secondary thiol.

24. The UV-curable water-based composition according to any one of claims 19 to 23, wherein the mercapto compound is a polyfunctional thiol.

25. The UV-curable water-based composition according to any one of claims 19 to 24, wherein the mercapto compound is encapsulated in the UV-curable oligomer.

26. The UV-curable water-based composition according to any one of claims 19 to 25, comprising a polymerization initiator and/or a sensitizer, wherein at least one of the polymerization initiator and/or sensitizer is encapsulated in the UV-curable oligomer.

27. The UV-curable water-based composition according to any one of claims 19 to 26, wherein the UV-curable oligomer is nonionic.
